# EUROPÄISCHE PATENTSCHRIFT

(11) **EP 3 242 425 B1**
(45) Veröffentlichungstag und Bekanntmachung des Hinweises auf die Patenterteilung: **02.09.2020**
(21) Anmeldenummer: 17169244.5
(22) Anmeldetag: 03.05.2017
(51) Int. Cl.: H04J 14/02

(54) **VERFAHREN ZUR EFFIZIENTEREN DATENÜBERTRAGUNG IN EINEM OPTISCHEN TELEKOMMUNIKATIONSNETZ IM WELLENLÄNGEN-MULTIPLEX-BETRIEB (WDM) VON VERSCHIEDENEN OPTISCHEN WELLENLÄNGEN, WOBEI DAS OPTISCHE TELEKOMMUNIKATIONSNETZ EINEN ERSTEN ÜBERGEORDNETEN NETZKNOTEN, EINEN ZWEITEN ÜBERGEORDNETEN NETZKNOTEN UND FERNER EINE MEHRZAHL VON NETZELEMENTEN AUFWEIST, OPTISCHES TELEKOMMUNIKATIONSNETZ, COMPUTERPROGRAMM UND COMPUTERPROGRAMMPRODUKT**
METHOD FOR MORE EFFECTIVE DATA TRANSMISSION IN AN OPTICAL TELECOMMUNICATION NETWORK IN WAVELENGTH MULTIPLEX OPERATION OF OPTICAL WAVELENGTHS, WHEREIN THE OPTICAL TELECOMMUNICATION NETWORK HAS ONE SUPER ORDINATE NETWORK NODE, A SECOND SUPERORDINATE NETWORK NODE AND A PLURALITY OF NETWORK ELEMENTS, OPTICAL TELECOMMUNICATION NETWORK, COMPUTER PROGRAM AND COMPUTER PROGRAM PRODUCT
PROCÉDÉ DE TRANSMISSION EFFICACE DE DONNÉES DANS UN RÉSEAU DE TÉLÉCOMMUNICATION OPTIQUE EN MULTIPLEXAGE DE LONGUEURS D'ONDE DE DIFFÉRENTES LONGUEURS D'ONDES OPTIQUES, LE RÉSEAU DE TÉLÉCOMMUNICATION OPTIQUE PRÉSENTANT UN PREMIER NOEUD DE RÉSEAU SUPÉRIEUR ET UN SECOND NOEUD DE RÉSEAU SUPÉRIEUR ET UNE PLURALITÉ D'ÉLÉMENTS DE RÉSEAU, RÉSEAU DE TÉLÉCOMMUNICATION OPTIQUE, PROGRAMME INFORMATIQUE ET PRODUIT-PROGRAMME INFORMATIQUE

(30) Priorität: 06.05.2016 DE 102016207857
(43) Veröffentlichungstag der Anmeldung: 08.11.2017
(73) Patentinhaber: Deutsche Telekom AG, 53113 Bonn (DE)
(72) Erfinder: GUNKEL, Matthias, 64291 Darmstadt (DE)
(74) Vertreter: Schwöbel, Thilo K.

(56) Entgegenhaltungen:
- EP-A1- 2 940 911
- EP-A2- 0 903 882
- US-A1- 2004 109 686

## Beschreibung

### Stand der Technik

Die Erfindung betrifft ein Verfahren zur effizienteren Datenübertragung in einem optischen Telekommunikationsnetz im Wellenlängen-Multiplex-Betrieb (WDM, wavelength division multiplex) von verschiedenen optischen Wellenlängen, wobei das optische Telekommunikationsnetz einen ersten übergeordneten Netzknoten, einen zweiten übergeordneten Netzknoten und ferner eine Mehrzahl von Netzelementen aufweist.

Die Erfindung betrifft ferner ein optisches Telekommunikationsnetz zur effizienteren Datenübertragung im Wellenlängen-Multiplex-Betrieb (WDM, wavelength division multiplex) von verschiedenen optischen Wellenlängen, wobei das optische Telekommunikationsnetz einen ersten übergeordneten Netzknoten, einen zweiten übergeordneten Netzknoten und ferner eine Mehrzahl von Netzelementen aufweist.

Ferner betrifft die Erfindung auch ein Computerprogramm mit Programmcodemitteln und ein Computerprogrammprodukt mit einem computerlesbaren Medium und einem auf dem computerlesbaren Medium gespeicherten Computerprogramm, die dazu geeignet sind, alle Schritte des erfindungsgemäßen Verfahrens auszuführen.

Verfahren zur Übertragung von Daten unter Nutzung von Lichtwellenleitern, d.h. unter Nutzung von optischen Telekommunikationsnetzen, sind allgemein bekannt. Beispielsweise gilt für viele breitbandige Telekommunikationsnetze, dass der überwiegende Teil der zu übertragenden Daten über optische Datenübertragungssysteme bzw. optische Telekommunikationsnetze, insbesondere unter Nutzung von Lichtwellenleitern, übertragen wird. Einsatz finden solche optischen Telekommunikationsnetze beispielsweise bei Aggregationsnetzen. Solche Aggregationsnetze, beispielsweise für Privatkundenverkehr, haben die Aufgabe, Verkehr von Regionalknoten zu Backbone-Knoten zu führen.

Es ist allgemein bekannt, in Aggregationsnetzen gemäß dem Stand der Technik auf der optischen Ebene/Schicht (Layer) filterlose Splitter und Koppler in einer offenen Horseshoe-Topologie (Hufeisen-Topologie) zu verwenden oder aber spektral fest eingestellte optische Add/Drop-Knoten (engl. FOADM, Fixed Optical Add/Drop Multiplexer) mit einer inhärenten Filterfunktionalität, ebenfalls in einer offenen Horseshoe-Topologie. Beide Varianten sind kostengünstig realisierbar, wobei die zweite Variante die Wiederverwendung einer Wellenlänge erlaubt, jedoch vergleichsweise wenig Flexibilität hinsichtlich sich ändernder Verkehrsanforderungen aufweist.

Eine Verbesserung gegenüber diesen beschriebenen Topologien stellt der Ringschluss dar, weil es dann auch im Fehlerfall des optischen Telekommunikationsnetzes prinzipiell immer einen Weg zum Ziel gibt. Dies hat jedoch zur Konsequenz, dass der Ring auf jeder Wellenlänge an wenigstens einer Stelle physikalisch unterbrochen werden muss, da es sonst in dem mit Verstärkern ausgerüsteten Ring zu einem "Laser"-Effekt kommen kann. Eine solche Unterbrechung kann mit stark dämpfenden Filtern in rekonfigurierbaren optischen Add/Drop-Knoten (engl. ROADM, Reconfigurable Optical Add/Drop Multiplexer) realisiert werden.

Es ist ferner beim Betrieb solcher Aggregationsnetze bekannt, dass das Backbone-Netz (bzw. Kernnetz) in einer A&B-Netzstruktur - bzw. mit einer gedoppelten Struktur - betrieben wird. Dies hat aus der Sicht der Internet Protokoll-Ebene bzw. Internet Protokoll-Schicht wesentliche Vorteile, denn beide Netze (bzw. Backbone-Netze) schützen sich gegenseitig: Hinter einem ersten übergeordneten Netzknoten (des optischen Telekommunikationsnetzes) befindet sich beispielsweise das A-(Backbone-)Netz und hinter einem zweiten übergeordneten Netzknoten (des optischen Telekommunikationsnetzes) befindet sich das (zum A-Backbone-Netz) symmetrisch aufgebaute B-(Backbone-)Netz.

Mit der vorliegenden Symmetrie im Backbone-Netz hat es sich als sinnvoll erwiesen, dass jeder beliebige (untergeordnete) Netzknoten des optischen Telekommunikationsnetzes sowohl mit dem ersten übergeordneten Netzknoten als auch mit dem zweiten übergeordneten Netzknoten verbunden ist.

Ein mit dem Ziel möglichst hoher Ausfallsicherheit geführter Betrieb eines solchen Aggregationsnetzes sieht vor, dass gleichzeitig neben dem operativ für die Datenübertragung genutzten Teil (zwischen einem Daten sendenden und einem die Daten empfangenden Knoten) der ringförmigen Glasfaserstrecke (Working-Pfad) für den Fehlerfall (d.h. beispielsweise im Fall eines Faserbruchs auf dem operativ genutzten Teil des Glasfaserrings) der übrige Teil der ringförmigen Glasfaserstrecke (Backup-Pfad) zur Übertragung der Daten zwischen den beteiligten Knoten verwendet wird.

Ferner wird mit Blick auf eine möglichst hohe Ausfallsicherheit für den Fall der Verwendung eines gedoppelten Backbone-Netzes (d.h. im Vergleich zu den übergeordneten Netzknoten des betrachteten optischen Telekommunikationsnetzes (bzw. optischen Rings) weiter übergeordnete Netzknoten) bei bisher bekannten Systemen üblicherweise gefordert, dass der operativ für die Datenübertragung zwischen einem (untergeordneten) Netzelement (des betrachteten optischen Telekommunikationsnetzes) einerseits und dem ersten übergeordneten Netzknoten andererseits genutzte erste Teil des optischen Telekommunikationsnetzes (d.h. der ringförmigen Glasfaserstrecke) für die Datenübertragung zwischen dem gleichen (untergeordneten) Netzelement einerseits und dem zweiten übergeordneten Netzknoten andererseits nicht im operativen Normallfall (sondern lediglich in einem Fehlerfall), d.h. beispielsweise im Fall eines Faserbruchs, genutzt wird, sondern dass im Gegenteil zur Datenübertragung (von Nutzdaten des gleichen Netzelements) von bzw. zu dem zweiten übergeordneten Netzknoten im Normalfall ein zweiter Teil des optischen Telekommunikationsnetzes (d.h. der ringförmigen Glasfaserstrecke) für diese Datenübertragung genutzt wird, der sich vom ersten Teil des optischen Telekommunikationsnetzes unterscheidet bzw. von diesem disjunkt ist.

Ein solcher Betrieb eines optischen Telekommunikationsnetzes führt jedoch üblicherweise zu einer mangelhaften Ausnutzung der verfügbaren Bandbreite des Aggregationsnetzes, insbesondere sobald man optische Interfaces (Transponder, Transceiver) mit an die Streckenlänge angepasster Datenrate einsetzt, sog. flex-rate Transceiver.

Ferner ist aus der Druckschrift EP 2 940 911 A1 ein Verfahren bekannt, bei dem übergeordnete Netzknoten wellenlängenselektive Schalter aufweisen. Optische Signale werden dabei jedoch in einen Transitpfad und einen Drop-Pfad aufgeteilt. Weiterhin ist aus der Druckschrift EP 0903 882 A2 ein WDM-Ringnetzwerk mit Vorhaltungen, um einen Ringschluss und damit das Anschwingen durch den Lasereffekt zu verhindern, bekannt. Die Druckschrift US 2004 109 686 A1 offenbart ein optisches Metro-Netzwerk.

### Offenbarung der Erfindung

Der Erfindung liegt die Aufgabe zugrunde, ein Verfahren und ein optisches Telekommunikationsnetz sowie ein Computerprogramm und ein Computerprogrammprodukt zur Verfügung zu stellen, welches die Bandbreitenressourcen möglichst optimal ausnutzt und damit eine bei ansonsten gleichen Bedingungen - insbesondere hinsichtlich des Investitionsbedarfs für die Komponenten des optischen Telekommunikationsnetzes - höhere Leistungsfähigkeit (im Sinn einer insgesamt höheren, nutzbaren Datentransportkapazität) bei gleichzeitig nicht oder nur unwesentlich reduzierter Ausfallsicherheit gegenüber Fehlerfällen wie beispielsweise Faserbrüchen oder dergleichen aufweist.

Diese Aufgabe wird erfindungsgemäß gelöst durch ein Verfahren zur effizienteren Datenübertragung in einem optischen Telekommunikationsnetz im Wellenlängen-Multiplex-Betrieb (WDM, wavelength division multiplex) von verschiedenen optischen Wellenlängen gemäß Anspruch 1 der vorliegenden Erfindung.

Es ist dadurch gemäß der vorliegenden Erfindung in vorteilhafter Weise möglich, dass die im Normalfall (d.h. ohne eine fehlerhafte Beeinträchtigung des optischen Telekommunikationsnetzes) verfügbare Datenübertragungsbandbreite dadurch verbessert werden kann, dass sowohl im Normalbetrieb als auch in einem Fehlerfallbetriebszustand (von mehreren Fehlerfallbetriebszuständen, die sich insbesondere auf Faserbrüche beziehen, die sich zwischen zwei (untergeordneten) Netzelementen oder aber zwischen einem untergeordneten Netzelement und einem übergeordneten Netzknoten oder aber zwischen zwei übergeordneten Netzknoten ereignen können) die vorgegebene Übertragungskapazität zwischen den verschiedenen Netzelementen bzw. Netzknoten realisierbar ist. Hierdurch können erfindungsgemäß insbesondere Vorteile gegenüber einem Betrieb des optischen Telekommunikationsnetzes realisiert werden, bei dem gefordert wird, dass der operativ für die Datenübertragung zwischen einem (untergeordneten) Netzelement des betrachteten optischen Telekommunikationsnetzes einerseits und dem ersten übergeordneten Netzknoten andererseits genutzte erste Teil des optischen Telekommunikationsnetzes für die Datenübertragung zwischen dem gleichen (untergeordneten) Netzelement einerseits und dem zweiten übergeordneten Netzknoten andererseits im operativen Normallfall nicht genutzt wird, sondern dass im Normalfall für diese Datenübertragung (von bzw. zu dem zweiten übergeordneten Netzknoten) ein zweiter Teil des optischen Telekommunikationsnetzes genutzt wird, der sich vom ersten Teil des optischen Telekommunikationsnetzes unterscheidet bzw. von diesem disjunkt und üblicherweise länger ist und daher eine geringe Performance erzielt.

Erfindungsgemäß ist es vorgesehen, dass das optische Telekommunikationsnetz eine ringförmig geschlossene optische Übertragungsstrecke (d.h. in Form eines optischen Rings bzw. eines Rings einer Glasfaserstrecke bzw. Glasfaserleitung) aufweist, wobei das optische Telekommunikationsnetz einen ersten übergeordneten Netzknoten, einen zweiten übergeordneten Netzknoten und ferner eine Mehrzahl von Netzelementen aufweist, wobei die Mehrzahl von Netzelementen wenigstens ein erstes Netzelement und ein zweites Netzelement aufweisen. Durch den Ringschluss ist es erfindungsgemäß in vorteilhafter Weise möglich, dass es auch im Fehlerfall (d.h. beispielsweise bei einer an einer Stelle unterbrochenen Glasfaserleitung) immer einen (nicht fehlerbehafteten) Weg zur Durchführung der Datenübertragung zwischen der jeweiligen Quelle der Daten und dem jeweiligen Ziel der Daten gibt. Erfindungsgemäß ist muss gewährleistet sein, dass der optische Ring auf jeder Wellenlänge an einer Stelle physikalisch unterbrochen ist, da es sonst in dem mit Verstärkern ausgerüsteten Ring zu Interferenzen bzw. einem "Laser"-Effekt kommt. Diese Unterbrechung wird erfindungsgemäß dadurch sichergestellt, dass der erste übergeordnete Netzknoten einen ersten wellenlängenselektiven Schalter (WSS, wavelength selective switch) und einen zweiten wellenlängenselektiven Schalter aufweist, wobei der erste und der zweite wellenlängenselektive Schalter jeweils neben einem Eingang (welcher an die optische Übertragungsstrecke angeschlossen ist) einzelne Ausgänge aufweisen (nachfolgend auch als erste Ausgänge bezeichnet), wobei die Ausgänge des ersten und zweiten wellenlängenselektiven Schalters miteinander gekoppelt bzw. verbunden sind. Hierdurch kann der Ringschluss in dem optischen Telekommunikationsnetz in einer Weise hergestellt werden, die sicherstellt, dass auf einem betrachteten Ausgang (der wellenlängenselektiven Schalter) keine im optischen Telekommunikationsnetz verwendete Wellenlänge sowohl vom ersten wellenlängenselektiven Schalter als auch vom zweiten wellenlängenselektiven Schalter eingespeist bzw. eingekoppelt wird. Dies ist möglich, weil die wellenlängenselektiven Schalter derart eingestellt bzw. konfiguriert werden können, dass für jeden der Ausgänge und jede der eingangsseitig (an den wellenlängenselektiven Schalter) anliegenden Wellenlängen (bzw. zur optischen Datenübertragung benutzten "Farben") diese Wellenlänge entweder am betrachteten Ausgang anliegt oder nicht. Mit anderen Worten gesagt bedeutet dies, dass die Einstellung des ersten und zweiten wellenlängenselektiven Schalters erfindungsgemäß derart vorgenommen wird, dass auf einem gekoppelten Ausgang beider wellenlängenselektiver Schalter jede verwendete Wellenlänge lediglich entweder vom ersten wellenlängenselektiven Schalter oder aber vom zweiten wellenlängenselektiven Schalter eingekoppelt wird - nicht jedoch von beiden wellenlängenselektiven Schaltern gleichzeitig. Hierdurch ist es erfindungsgemäß in vorteilhafter Weise möglich, dass Interferenzeffekte bzw. der Lasereffekt vermieden werden und dennoch für den Normalbetriebsmodus des optischen Telekommunikationsnetzes gewährleistet wird, dass von jedem beliebigen Punkt der optischen Übertragungsstrecke (d.h. von jedem beliebigen Netzelement bzw. übergeordneten Netzknoten) jeder beliebige andere Punkt der optischen Übertragungsstrecke unter Nutzung der gleichen Wellenlänge sowohl über die kürzeste Verbindungsstrecke der optischen Übertragungsstrecke als auch unter Nutzung der komplementären (d.h. zur kürzesten Strecke disjunkte) Strecke der ringförmigen optischen Übertragungsstrecke - d.h. in entgegengesetzte Richtungen - erreichbar ist, und dass für jeden Fehlerfallbetriebsmodus (d.h. insbesondere für Fälle eines Faserbruchs an einer beliebigen Stelle der ringförmigen optischen Übertragungsstrecke) wenigstens eine dieser Strecken (d.h. entweder die kürzeste Verbindungsstrecke oder die komplementäre Verbindungsstrecke) nutzbar ist.

Erfindungsgemäß ist es gemäß einer alternativen Ausführungsform vorgesehen, dass der erste wellenlängenselektive Schalter und der zweite wellenlängenselektive Schalter (gemeinsam) als ein Twin-wellenlängenselektives Schalterpaar derart implementiert sind, dass der erste wellenlängenselektive Schalter der ersten wellenlängenselektiven Schalterfunktionalität des Twin-wellenlängenselektiven Schalterpaars entspricht, während der zweite wellenlängenselektive Schalter der zweiten wellenlängenselektiven Schalterfunktionalität des Twin-wellenlängenselektiven Schalterpaars entspricht. Entsprechend weist gemäß dieser alternativen Ausführungsform der erste übergeordnete Netzknoten bezüglich des ersten und dritten Signalpfades die erste wellenlängenselektive Schalterfunktionalität (des Twin-wellenlängenselektiven Schalterpaars) und bezüglich des zweiten und vierten Signalpfades die zweite wellenlängenselektive Schalterfunktionalität (des Twin-wellenlängenselektiven Schalterpaars) auf, wobei die erste und zweite wellenlängenselektive Schalterfunktionalitäten erste Ausgänge derart aufweisen, dass jedem der ersten Ausgänge einem der Mehrzahl von Betriebsmodi des optischen Telekommunikationsnetzes zugeordnet ist. Entsprechendes gilt (hinsichtlich des Twin-wellenlängenselektiven Schalterpaares) an allen Stellen, an denen im Kontext der vorliegenden Patentanmeldung vom ersten wellenlängenselektiven Schalter bzw. vom zweiten wellenlängenselektiven Schalter die Rede ist.

Typischerweise weist das optische Telekommunikationsnetz bzw. der Glasfaserring eine Vielzahl von Netzelementen auf, welche auch als sogenannte R1-Router bzw. als (regionale) Aggregationsknoten bezeichnet werden und für ein bestimmte Region die Anbindung der in der (Netzwerk-)Hierarchie darunter angeordneten Netzelemente an das Backbone-Netz gewährleisten. Ferner weist das optische Telekommunikationsnetz den ersten übergeordneten Netzknoten und den zweiten übergeordneten Netzknoten auf. Diese Netzknoten werden auch als R2-Router bzw. als Backbone-Router bezeichnet. Aufgrund dessen, dass der erste und zweite übergeordnete Netzknoten Teil des optischen Telekommunikationsnetzes bzw. Teil der optischen Übertragungsstrecke ist, ist es erfindungsgemäß in vorteilhafter Weise möglich, dass das Backbone-Netz (bzw. Kernnetz) in einer A&B-Netzstruktur - bzw. mit einer gedoppelten Struktur - betrieben wird. Hierdurch ist es aus Sicht der Internet Protokoll-Ebene bzw. Internet Protokoll-Schicht in vorteilhafter Weise möglich, dass sich beide Netze (bzw. Backbone-Netze) gegenseitig schützen: Hinter einem ersten übergeordneten Netzknoten (des optischen Telekommunikationsnetzes bzw. der optischen Übertragungsstrecke) befindet sich beispielsweise das A-(Backbone-)Netz und hinter einem zweiten übergeordneten Netzknoten (des optischen Telekommunikationsnetzes bzw. der optischen Übertragungsstrecke) befindet sich das (zum A-Backbone-Netz) symmetrisch aufgebaute B-(Backbone-)Netz.

Ebenso wird hierdurch in vorteilhafter Weise möglich, dass die gedoppelte Anbindung der Aggregationsknoten (d.h. jedes einzelnen der (Mehrzahl bzw. Vielzahl von) R1-Router) an zwei R2-Router (d.h. das "dual homing"-Prinzip) nicht angetastet wird. Verkehrsbeziehungen bestehen in einem solchen Fall in aller Regel nur zwischen dem jeweils betrachteten Aggregationsknoten (bzw. R1-Router) einerseits und dem ersten übergeordneten Netzknoten (erster R2-Router) bzw. dem zweiten übergeordneten Netzknoten (zweiter R2-Router) andererseits. Zwischen den Aggregationsknoten (R1-Knoten bzw. R1-Routern) selbst besteht insbesondere keine direkte Beziehung. Die Fasertopologie der optischen Übertragungsstrecke selbst ist bidirektional ausgeführt.

Erfindungsgemäß weist das Telekommunikationsnetz die optische Übertragungsstrecke als eine topologisch ringförmig geschlossene (sowie bidirektionale, d.h. auf jedem Streckenabschnitt bidirektional nutzbare) optische Übertragungsstrecke derart auf, dass die optische Übertragungsstrecke den ersten übergeordneten Netzknoten und das erste Netzelement sowie das erste Netzelement und das zweite Netzelement sowie ferner das zweite Netzelement und den zweiten übergeordneten Netzknoten direkt oder indirekt miteinander verbindet und dass die optische Übertragungsstrecke weiterhin auch den ersten übergeordneten Netzknoten und den zweiten übergeordneten Netzknoten miteinander verbindet. Hierdurch wird über die optische Übertragungsstrecke erfindungsgemäß
-- vom ersten Netzelement zum ersten übergeordneten Netzknoten ein erster Signalpfad definiert,
-- vom ersten Netzelement zum zweiten übergeordneten Netzknoten ein zweiter Signalpfad definiert, wobei der zweite Signalpfad zusätzlich vom zweiten übergeordneten Netzknoten zum ersten übergeordneten Netzknoten verläuft,
-- vom zweiten Netzelement zum ersten übergeordneten Netzknoten ein dritter Signalpfad definiert und
-- vom zweiten Netzelement zum zweiten übergeordneten Netzknoten ein vierter Signalpfad definiert, wobei der vierte Signalpfad zusätzlich vom zweiten übergeordneten Netzknoten zum ersten übergeordneten Netzknoten verläuft,
wobei auf der optischen Übertragungsstrecke der erste und zweite Signalpfad sowie der dritte und vierte Signalpfad jeweils disjunkt sind und sich jeweils zur optischen Übertragungsstrecke ergänzen (d.h. komplementär sind) und wobei ein erstes optisches Signal (unter Nutzung einer ersten Wellenlänge bzw. "Farbe") vom ersten Netzelement zum ersten übergeordneten Netzknoten sowohl über den ersten Signalpfad als auch über den zweiten Signalpfad und ein zweites optisches Signal (unter Nutzung einer zweiten Wellenlänge bzw. "Farbe") vom zweiten Netzelement zum ersten übergeordneten Netzknoten sowohl über den dritten Signalpfad als auch über den vierten Signalpfad übertragen wird.

Erfindungsgemäß ist insbesondere vorgesehen, dass das optische Telekommunikationsnetz hinsichtlich des ersten und zweiten übergeordneten Netzknotens symmetrisch ist, d.h. die Rollen des ersten und zweiten übergeordneten Netzknotens können insbesondere vertauscht werden bzw. es verlaufen - analog zum ersten, zweiten, dritten und vierten Signalpfad - ein weiterer erster Signalpfad vom ersten Netzelement zum zweiten übergeordneten Netzknoten, ein weiterer zweiter Signalpfad vom ersten Netzelement zum ersten übergeordneten Netzknoten, wobei der weitere zweite Signalpfad zusätzlich vom ersten übergeordneten Netzknoten zum zweiten übergeordneten Netzknoten verläuft, ein weiterer dritter Signalpfad vom zweiten Netzelement zum zweiten übergeordneten Netzknoten und ein weiterer vierter Signalpfad vom zweiten Netzelement zum ersten übergeordneten Netzknoten, wobei der weitere vierte Signalpfad zusätzlich vom ersten übergeordneten Netzknoten zum zweiten übergeordneten Netzknoten verläuft. Ebenfalls analog zum ersten, zweiten, dritten und vierten Signalpfad bzw. analog zum ersten und zweiten optischen Signal, sind auf der optischen Übertragungsstrecke der weitere erste und weitere zweite Signalpfad sowie der weitere dritte und weitere vierte Signalpfad jeweils disjunkt und ergänzen sich jeweils zur optischen Übertragungsstrecke, wobei ein weiteres erstes optisches Signal vom ersten Netzelement zum zweiten übergeordneten Netzknoten sowohl über den weiteren ersten Signalpfad als auch über den weiteren zweiten Signalpfad und ein weiteres zweites optisches Signal vom zweiten Netzelement zum zweiten übergeordneten Netzknoten sowohl über den weiteren dritten Signalpfad als auch über den weiteren vierten Signalpfad übertragen wird und wobei der zweite übergeordnete Netzknoten bezüglich des weiteren ersten und weiteren dritten Signalpfades einen dritten wellenlängenselektiven Schalter und bezüglich des weiteren zweiten und weiteren vierten Signalpfades einen vierten wellenlängenselektiven Schalter aufweist, wobei der dritte und vierte wellenlängenselektive Schalter zweite Ausgänge derart aufweisen, dass jedem der zweiten Ausgänge einem der Mehrzahl von Betriebsmodi des optischen Telekommunikationsnetzes zugeordnet ist, und wobei das Verfahren den Schritt umfasst, dass in Abhängigkeit des Betriebsmodus des optischen Telekommunikationsnetzes durch den zweiten übergeordneten Netzknoten der dem jeweils vorliegenden Betriebsmodus des optischen Telekommunikationsnetzes zugeordnete der zweiten Ausgänge zum Empfang des weiteren ersten optischen Signals und des weiteren zweiten optischen Signals ausgewertet wird.

Erfindungsgemäß ist es gemäß einer alternativen Ausführungsform vorgesehen, dass der dritte wellenlängenselektive Schalter und der vierte wellenlängenselektive Schalter (gemeinsam) als ein weiteres Twin-wellenlängenselektives Schalterpaar derart implementiert sind, dass der dritte wellenlängenselektive Schalter der ersten wellenlängenselektiven Schalterfunktionalität des weiteren Twin-wellenlängenselektiven Schalterpaars entspricht, während der zweite wellenlängenselektive Schalter der zweiten wellenlängenselektiven Schalterfunktionalität des weiteren Twin-wellenlängenselektiven Schalterpaars entspricht. Entsprechend weist gemäß einer solchen alternativen Ausführungsform der zweite übergeordnete Netzknoten bezüglich des weiteren ersten und weiteren dritten Signalpfades die erste wellenlängenselektive Schalterfunktionalität des weiteren Twin-wellenlängenselektiven Schalterpaars und bezüglich des weiteren zweiten und weiteren vierten Signalpfades die zweite wellenlängenselektive Schalterfunktionalität des weiteren Twin-wellenlängenselektiven Schalterpaars auf, wobei die erste und zweite wellenlängenselektive Schalterfunktionalitäten des weiteren Twin-wellenlängenselektiven Schalterpaars zweite Ausgänge derart aufweisen, dass jedem der zweiten Ausgänge einem der Mehrzahl von Betriebsmodi des optischen Telekommunikationsnetzes zugeordnet ist. Entsprechendes gilt (hinsichtlich des weiteren Twin-wellenlängenselektiven Schalterpaares) an allen Stellen, an denen im Kontext der vorliegenden Patentanmeldung vom dritten wellenlängenselektiven Schalter bzw. vom vierten wellenlängenselektiven Schalter die Rede ist.

Erfindungsgemäß ist von besonderem Vorteil, dass sowohl an allen übergeordneten Netzknoten als auch an allen Netzelementen kostengünstige add/drop-Bauelemente (add/drop-ports) Verwendung finden können, die jeweils alle benutzten Wellenlängen in beide Übertragungsrichtungen senden bzw. empfangen (die also "colorless" und "directionless" sind). An allen Netzelementen kann erfindungsgemäß in vorteilhafter Weise eine filterlose Knotenarchitektur realisiert werden sowie im Transitpfad eine passive Knotenarchitektur. Erfindungsgemäß ist es ferner von besonderem Vorteil, dass alle Fehlermuster (insbesondere durch Ausfall eines Fasersegments, etwa durch Faserbruch) auf der ringförmigen optischen Übertragungsstrecke optisch geheilt werden können, d.h. es ist möglich, den Betrieb der optischen Übertragungsstrecke für einen beliebigen solchen Fehlerfall aufrecht zu erhalten (unabhängig davon, welches Fasersegment betroffen ist). Hierbei ist ein schnellgreifender Schutz gegenüber sämtlichen Ausfällen in der Optik, d.h. neben einem Faserbruch auch ein Ausfall eines Verstärkers oder von Line-In- bzw. Line-Out-Baugruppen, möglich.

Gegenüber einer reinen Waste and Drop-Architektur werden lediglich die Hälfte der kostentreibenden elektrisch-optischen Schnittstellen sowie der Routerports benötigt, so dass die gesamten Netzkosten erheblich gesenkt werden können. Ferner ist es erfindungsgemäß möglich, ohne Interaktion mit der IP-Ebene einen Schutz bereitzustellen (d.h. es ist keine multilayer resilience erforderlich).

Erfindungsgemäß ist es bevorzugt vorgesehen, dass
-- zwischen dem ersten übergeordneten Netzknoten und dem ersten Netzelement in Richtung vom ersten übergeordneten Netzknoten zum ersten Netzelement ein fünfter Signalpfad verläuft,
-- zwischen dem ersten übergeordneten Netzknoten und dem ersten Netzelement in Richtung vom ersten übergeordneten Netzknoten über den zweiten übergeordneten Netzknoten zum ersten Netzelement ein sechster Signalpfad verläuft,
-- zwischen dem ersten übergeordneten Netzknoten und dem zweiten Netzelement in Richtung vom ersten übergeordneten Netzknoten zum zweiten Netzelement ein siebter Signalpfad verläuft, und
-- zwischen dem ersten übergeordneten Netzknoten und dem zweiten Netzelement in Richtung vom ersten übergeordneten Netzknoten über den zweiten übergeordneten Netzknoten zum zweiten Netzelement ein achter Signalpfad verläuft,
wobei auf der optischen Übertragungsstrecke der fünfte und sechste Signalpfad sowie der siebte und achte Signalpfad jeweils disjunkt sind und sich jeweils zur optischen Übertragungsstrecke ergänzen und wobei ein drittes optisches Signal vom ersten übergeordneten Netzknoten zum ersten Netzelement sowohl über den fünften Signalpfad als auch über den sechsten Signalpfad und ein viertes optisches Signal vom ersten übergeordneten Netzknoten zum zweiten Netzelement sowohl über den siebten Signalpfad als auch über den achten Signalpfad übertragen wird,
wobei der zweite übergeordnete Netzknoten bezüglich des sechsten und achten Signalpfades einen vierten wellenlängenselektiven Schalter aufweist, wobei der vierte wellenlängenselektive Schalter zweite Ausgänge derart aufweist, dass jedem der zweiten Ausgänge einer der Mehrzahl von Betriebsmodi des optischen Telekommunikationsnetzes zugeordnet ist, und wobei das Verfahren den Schritt umfasst, dass durch den zweiten übergeordneten Netzknoten das dritte optische Signal und/oder das vierte optische Signal zum ersten und/oder zweiten Netzelement weitergeleitet werden.

Erfindungsgemäß ist somit durch den fünften bis achten Signalpfad auch die Rückrichtung, d.h. die Datenübertragung vom ersten übergeordneten Netzknoten zum ersten bzw. zweiten Netzelement, gewährleistet, wobei für den fünften und siebten Signalpfad direkt zum jeweiligen Netzelement übertragen wird, für den sechsten und achten Signalpfad über den zweiten übergeordneten Netzknoten zum jeweiligen Netzelement übertragen wird und wobei für das dritte bzw. vierte optische Signal insbesondere wiederum unterschiedliche optische Wellenlängen bzw. Farben Verwendung finden. Dadurch, dass auch für die Rückrichtung - vom jeweiligen übergeordneten Netzknoten zu dem jeweiligen Netzelement und zumindest für zwei der vier Signalpfade - eine Übertragung unter Nutzung eines wellenlängenselektiven Schalters (nämlich des wellenlängenselektiven Schalters des zweiten übergeordneten Netzknotens) in Abhängigkeit des jeweils verwendeten Betriebsmodus des optischen Telekommunikationsnetzes erfolgt, kann eine schnelle Umschaltung und damit Heilung auf der optischen Ebene auch im Falle eines Faserbruchs gewährleistet werden.

Erfindungsgemäß ist insbesondere vorgesehen, dass das optische Telekommunikationsnetz hinsichtlich des ersten und zweiten übergeordneten Netzknotens auch hinsichtlich der Rückrichtung (d.h. die Datenübertragung von den übergeordneten Netzknoten zu den Netzelementen) symmetrisch ist, d.h. die Rollen des ersten und zweiten übergeordneten Netzknotens können insbesondere vertauscht werden bzw. es verlaufen - analog zum fünften, sechsten, siebten und achten Signalpfad - ein weiterer fünfter Signalpfad vom zweiten übergeordneten Netzknoten zum ersten Netzelement, ein weiterer sechster Signalpfad vom zweiten übergeordneten Netzknoten über den ersten übergeordneten Netzknoten zum ersten Netzelement, ein weiterer siebter Signalpfad vom zweiten übergeordneten Netzknoten zum zweiten Netzelement und ein weiterer achter Signalpfad vom zweiten übergeordneten Netzknoten über den ersten übergeordneten Netzknoten zum zweiten Netzelement. Wiederum analog zum fünften bis achten Signalpfad sind auf der optischen Übertragungsstrecke der weitere fünfte und weitere sechste Signalpfad sowie der weitere siebte und weitere achte Signalpfad jeweils disjunkt und ergänzen sich jeweils zur optischen Übertragungsstrecke, und es wird ein weiteres drittes optisches Signal vom zweiten übergeordneten Netzknoten zum ersten Netzelement sowohl über den fünften Signalpfad als auch über den sechsten Signalpfad und ein weiteres viertes optisches Signal vom zweiten übergeordneten Netzknoten zum zweiten Netzelement sowohl über den siebten Signalpfad als auch über den achten Signalpfad übertragen wird. Wiederum analog zum fünften bis achten Signalpfad weist der erste übergeordnete Netzknoten bezüglich des weiteren sechsten und weiteren achten Signalpfades den zweiten wellenlängenselektiven Schalter auf, wobei der zweite wellenlängenselektive Schalter erste Ausgänge derart aufweist, dass jedem der ersten Ausgänge einer der Mehrzahl von Betriebsmodi des optischen Telekommunikationsnetzes zugeordnet ist, und wobei das Verfahren den Schritt umfasst, dass durch den ersten übergeordneten Netzknoten das weitere dritte optische Signal und/oder das weitere vierte optische Signal zum ersten und/oder zweiten Netzelement weitergeleitet werden.

Erfindungsgemäß ist es weiterhin auch bevorzugt, dass der erste übergeordnete Netzknoten einen ersten Leistungsmonitor und einen ersten optischen Schalter aufweist, wobei die Auswertung - zum Empfang des ersten optischen Signals und des zweiten optischen Signals durch den ersten übergeordneten Netzknoten - des dem jeweils vorliegenden Betriebsmodus des optischen Telekommunikationsnetzes zugeordneten Ausgang der ersten Ausgänge die folgenden Teilschritte umfasst:
-- in einem ersten Teilschritt wird ein bestimmter, dem vorliegenden Betriebsmodus des optischen Telekommunikationsnetzes zugeordneter Ausgang der ersten Ausgänge ausgewertet, wobei ein optischer Signalleistungsparameter wenigstens eines der ersten Ausgänge durch den ersten Leistungsmonitor erfasst wird,
-- in einem nachfolgenden zweiten Teilschritt wird entschieden, ob der im ersten Teilschritt erfasste Wert des optischen Signalleistungsparameters einen Wechsel hin zur Auswertung eines gegenüber dem bestimmten Ausgang anderen Ausgangs der ersten Ausgänge indiziert,
-- in einem nachfolgenden dritten Teilschritt wird - für den Fall, dass der erfasste Wert des optischen Signalleistungsparameters einen Wechsel des Ausgangs der ersten Ausgänge indiziert - der erste Schalter des ersten übergeordneten Netzknotens zur Auswertung des anderen Ausgangs betätigt, oder - für den Fall das der erfasste Wert des optischen Signalleistungsparameters keinen Wechsel des Ausgangs der ersten Ausgänge indiziert - zum ersten Teilschritt verzweigt.

Dadurch, dass erfindungsgemäß zwischen den verschiedenen Betriebsmodi und insbesondere zwischen dem Normalbetriebsmodus und dem jeweils vorliegenden Fehlerfallbetriebsmodus durch Betätigung des ersten Schalters in Abhängigkeit des durch den Leistungsmonitor überwachten optischen Signalleistungsparameters umgeschaltet wird, ist es erfindungsgemäß vorteilhaft möglich, dass unmittelbar und quasi instantan auf eine Fehlersituation des optischen Telekommunikationsnetzes reagiert werden kann.

In Bezug auf die Überwachung des optischen Signalleistungsparameters ist es erfindungsgemäß besonders bevorzugt, dass
-- entweder (d.h. gemäß einer ersten Variante der vorliegenden Erfindung) der optische Signalleistungsparameter des dem Normalbetriebsmodus entsprechenden Ausgangs der ersten Ausgänge durch den ersten Leistungsmonitor erfasst wird, wobei zusätzlich insbesondere eine spektrale Analyse erfolgt,
-- oder aber, dass (gemäß einer zweiten Variante der vorliegenden Erfindung) die optischen Signalleistungsparameter aller ersten Ausgänge durch den ersten Leistungsmonitor erfasst werden.

Gemäß der ersten Variante ist es möglich, lediglich den dem Normalbetriebsmodus entsprechenden Ausgang der ersten Ausgänge zu überwachen bzw. durch den Leistungsmonitor zu erfassen; um zu einer Information darüber zu gelangen, welcher (von verschiedenen) Fehlerfallbetriebsmodi im Falle eines Fehlers anzuwenden ist, ist es in vorteilhafter Weise möglich eine Spektralanalyse bzw. spektrale Analyse (der verschiedenen Wellenlängen (bzw. Farben) durchzuführen, die auf dem dem Normalbetriebsmodus entsprechenden Ausgang der ersten Ausgänge anliegen bzw. ankommen). Wird eine solche Spektralanalyse durch geführt, ist es vorteilhaft möglich, mit vergleichsweise geringem Aufwand in Abhängigkeit der ankommenden (bzw. nicht ankommenden) Wellenlängen zu entscheiden, welcher Ausgang der (beim ersten übergeordneten Netzknoten) ersten (bzw. beim zweiten übergeordneten Netzknoten zweiten) Ausgänge für den vorliegenden Fehlerfall(betriebsmodus) zu wählen ist. Alternativ oder zusätzlich ist es gemäß der zweiten Variante auch vorteilhaft möglich, dass (im Falle eines Fehlers) zur Ermittlung des anzuwenden Fehlerfallbetriebsmodus die optischen Signalleistungsparameter aller ersten Ausgänge durch den ersten Leistungsmonitor erfasst werden, etwa im Sinne lediglich einer Aufsummierung aller ersten Ausgänge oder aber im Sinne einer Einzelauswertung jedes der ersten Ausgänge dahingehend, dass jeweils die Summe der ankommenden optischen Signale der verschiedenen Wellenlängen erfasst wird, wobei zur Ermittlung, welcher Ausgang der (beim ersten übergeordneten Netzknoten) ersten (bzw. beim zweiten übergeordneten Netzknoten zweiten) Ausgänge für den vorliegenden Fehlerfall(betriebsmodus) zu wählen ist, der Ausgang gewählt wird, welcher das stärkste Signal aufweist bzw. welcher ein Signal aufweist, welches (aufgrund etwa eines Faserbruchs) nicht eingebrochen ist.

In analoger Weise wie oben bereits ausgeführt sind der erste und zweite übergeordnete Netzknoten erfindungsgemäß insbesondere symmetrisch ausgebildet, d.h. auch der zweite übergeordnete Netzknoten weist - analog zum ersten Leistungsmonitor des ersten übergeordneten Netzknotens - einen zweiten Leistungsmonitor und einen zweiten optischen Schalter auf, wobei die Auswertung - zum Empfang des weiteren ersten optischen Signals und des weiteren zweiten optischen Signals durch den zweiten übergeordneten Netzknoten - des dem jeweils vorliegenden Betriebsmodus des optischen Telekommunikationsnetzes zugeordneten Ausgang der zweiten Ausgänge die analogen Teilschritte (die oben bezüglich des ersten übergeordneten Netzknotens genannt wurden) umfasst.

Weiterhin ist es erfindungsgemäß bevorzugt vorgesehen, dass die optischen Signale der ersten Ausgänge des ersten und zweiten wellenlängenselektiven Schalters jeweils durch optische Addition des jeweiligen Ausgangs des ersten wellenlängenselektiven Schalters und des zweiten wellenlängenselektiven Schalters mittels optischer Koppler erfolgt, wobei insbesondere sowohl der erste als auch der zweite wellenlängenselektive Schalter derart eingestellt sind, dass auf allen ersten Ausgängen eine Kollision eines vom ersten wellenlängenselektiven Schalter transmittierten optischen Signals mit einem vom zweiten wellenlängenselektiven Schalter transmittierten optischen Signals vermieden wird.

Hierdurch ist es erfindungsgemäß in vorteilhafter Weise möglich, dass die wellenlängenselektiven Schalter (sowohl des ersten übergeordneten Netzknotens als auch des zweiten übergeordneten Netzknotens) zur Vermeidung von Interferenzeffekten bzw. des Lasereffekts mehr oder weniger statisch eingestellt bzw. eingeregelt werden können und (im Falle eines Fehlers, insbesondere eines Faserbruchs an einer beliebigen Stelle des optischen Telekommunikationsnetzes) lediglich eine Umschaltung hinsichtlich des zu benutzenden (bzw. auszuwertenden) Ausgangs der ersten Ausgänge (mit Hilfe des ersten Schalters des ersten übergeordneten Netzknotens) (bzw. eine Umschaltung hinsichtlich des zu benutzenden (bzw. auszuwertenden) Ausgangs der zweiten Ausgänge mit Hilfe des zweiten Schalters des zweiten übergeordneten Netzknotens) vorzunehmen ist.

Erfindungsgemäß ist es ferner auch bevorzugt vorgesehen, dass die Erfassung und die Auswertung des optischen Signalleistungsparameters und die Betätigung des ersten Schalters des ersten übergeordneten Netzknotens innerhalb eines Zeitintervalls nach Eintreten des Fehlerfalls erfolgt, wobei das Zeitintervall kleiner als bis maximal gleich 100 Millisekunden, bevorzugt kleiner als bis maximal gleich 50 Millisekunden, besonders bevorzugt kleiner als bis maximal gleich 30 Millisekunden, ist.

Hierdurch ist es erfindungsgemäß vorteilhaft möglich, dass auch in einem schwerwiegenden Fehlerfall auf der Ebene des optischen Telekommunikationsnetzes, wie etwa eines Faserbruchs, diese Fehlersituation kompensiert werden kann, ohne dass dies zwingend nachteilige Folgen für die IP-Ebene, insbesondere eine Änderung von Routing-Konfigurationen auf der IP-Ebene (Internet Protokoll-Ebene), nach sich ziehen würde.

Ein weiterer Gegenstand der vorliegenden Erfindung ist ein optisches Telekommunikationsnetz zur effizienteren Datenübertragung im Wellenlängen-Multiplex-Betrieb (WDM, wavelength division multiplex) von verschiedenen optischen Wellenlängen gemäß Anspruch 7 der vorliegenden Erfindung.

Es ist hierdurch erfindungsgemäß - auch mit Bezug auf das optische Telekommunikationsnetz - vorteilhaft möglich, dass die im Normalfall (d.h. ohne eine fehlerhafte Beeinträchtigung des optischen Telekommunikationsnetzes) verfügbare Datenübertragungsbandbreite dadurch verbessert werden kann, dass sowohl im Normalbetrieb als auch in einem Fehlerfallbetriebszustand die vorgegebene Übertragungskapazität zwischen den verschiedenen Netzelementen bzw. Netzknoten realisierbar ist.

Ferner ist es erfindungsgemäß - auch mit Bezug auf das optische Telekommunikationsnetz - bevorzugt vorgesehen, dass
-- zwischen dem ersten übergeordneten Netzknoten und dem ersten Netzelement in Richtung vom ersten übergeordneten Netzknoten zum ersten Netzelement ein fünfter Signalpfad verläuft,
-- zwischen dem ersten übergeordneten Netzknoten und dem ersten Netzelement in Richtung vom ersten übergeordneten Netzknoten über den zweiten übergeordneten Netzknoten zum ersten Netzelement ein sechster Signalpfad verläuft,
-- zwischen dem ersten übergeordneten Netzknoten und dem zweiten Netzelement in Richtung vom ersten übergeordneten Netzknoten zum zweiten Netzelement ein siebter Signalpfad verläuft, und
-- zwischen dem ersten übergeordneten Netzknoten und dem zweiten Netzelement in Richtung vom ersten übergeordneten Netzknoten über den zweiten übergeordneten Netzknoten zum zweiten Netzelement ein achter Signalpfad verläuft,
wobei auf der optischen Übertragungsstrecke der fünfte und sechste Signalpfad sowie der siebte und achte Signalpfad jeweils disjunkt sind und sich jeweils zur optischen Übertragungsstrecke ergänzen und wobei das optische Telekommunikationsnetz derart konfiguriert ist, dass ein drittes optisches Signal vom ersten übergeordneten Netzknoten zum ersten Netzelement sowohl über den fünften Signalpfad als auch über den sechsten Signalpfad und ein viertes optisches Signal vom ersten übergeordneten Netzknoten zum zweiten Netzelement sowohl über den siebten Signalpfad als auch über den achten Signalpfad übertragen wird,
wobei der zweite übergeordnete Netzknoten bezüglich des sechsten und achten Signalpfades einen vierten wellenlängenselektiven Schalter aufweist, wobei der vierte wellenlängenselektive Schalter zweite Ausgänge derart aufweist, dass jedem der zweiten Ausgänge einer der Mehrzahl von Betriebsmodi des optischen Telekommunikationsnetzes zugeordnet ist, und wobei das optische Telekommunikationsnetz derart konfiguriert ist, dass durch den zweiten übergeordneten Netzknoten das dritte optische Signal und/oder das vierte optische Signal zum ersten und/oder zweiten Netzelement weitergeleitet werden.

Ferner ist es erfindungsgemäß - auch mit Bezug auf das optische Telekommunikationsnetz - bevorzugt, dass der erste übergeordnete Netzknoten einen ersten Leistungsmonitor und einen ersten optischen Schalter aufweist, wobei das optische Telekommunikationsnetz derart konfiguriert ist, dass zur Auswertung - zum Empfang des ersten optischen Signals und des zweiten optischen Signals durch den ersten übergeordneten Netzknoten - des dem jeweils vorliegenden Betriebsmodus des optischen Telekommunikationsnetzes zugeordneten Ausgangs der ersten Ausgänge optischer Signalleistungsparameter wenigstens eines der ersten Ausgänge durch den ersten Leistungsmonitor erfasst und in Abhängigkeit des erfassten Werts des optischen Signalleistungsparameters durch Betätigen des ersten Schalters ein Wechsel des Ausgangs der ersten Ausgänge vorgenommen wird.

Ferner bezieht sich die vorliegende Erfindung auch auf ein Computerprogramm mit Programmcodemitteln, mit deren Hilfe alle Schritte des erfindungsgemäßen Verfahrens durchführbar sind, wenn das Computerprogramm auf einer programmierbaren Einrichtung und/oder einem übergeordneten Netzknoten ausgeführt wird.

Weiterhin ist Gegenstand der vorliegenden Erfindung ein Computerprogrammprodukt mit einem computerlesbaren Medium und einem auf dem computerlesbaren Medium gespeicherten Computerprogramm mit Programmcodemitteln, die dazu geeignet sind, dass alle Schritte des erfindungsgemäßen Verfahrens durchführbar sind, wenn das Computerprogramm auf einer programmierbaren Einrichtung und/oder einem übergeordneten Netzknoten ausgeführt wird.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

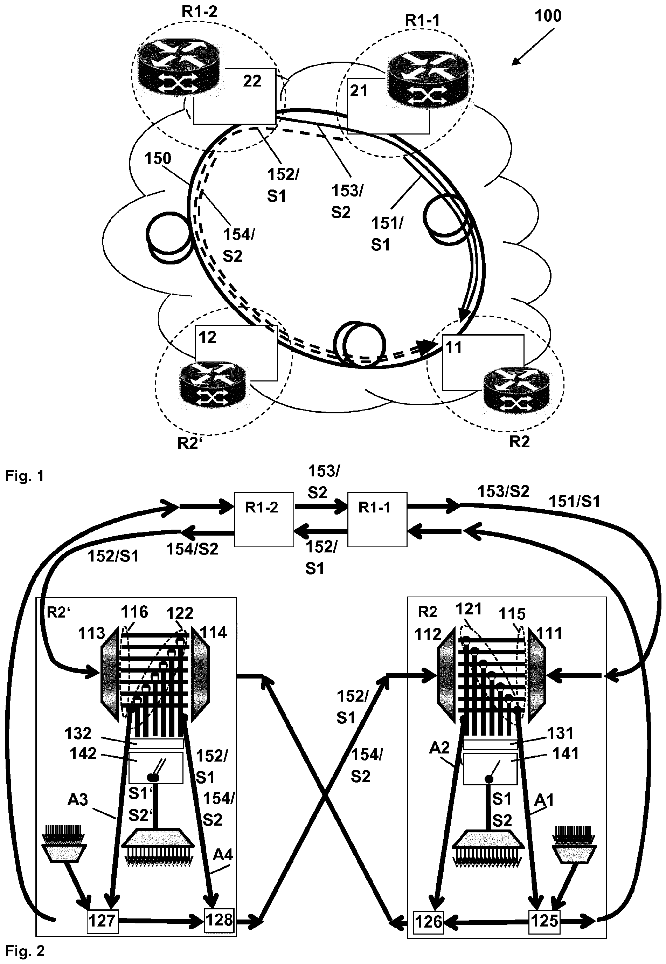

- **Figur 1**: zeigt eine schematische Ansicht eines beispielhaften optischen Telekommunikationsnetzes bzw. einer optischen Übertragungsstrecke mit einem ersten und einem zweiten übergeordneten Netzknoten sowie mit einem ersten Netzelement und einem zweiten Netzelement.
- **Figur 2**: zeigt eine weitere schematische Ansicht des beispielhaften optischen Telekommunikationsnetzes bzw. der optischen Übertragungsstrecke mit dem ersten und dem zweiten übergeordneten Netzknoten sowie mit dem ersten Netzelement und dem zweiten Netzelement, wobei der erste übergeordnete Netzknoten und der zweite übergeordnete Netzknoten detaillierter dargestellt sind - für den Fall der Datenübertragung vom ersten bzw. zweiten Netzelement zum ersten übergeordneten Netzknoten.

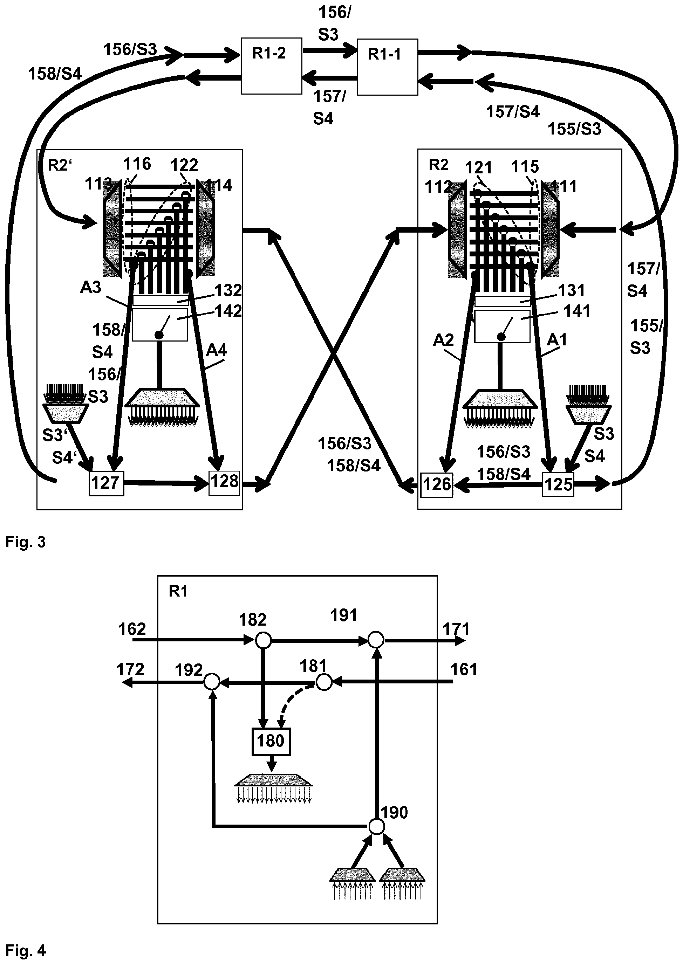

- **Figur 3**: zeigt eine weitere schematische Ansicht des beispielhaften optischen Telekommunikationsnetzes bzw. der optischen Übertragungsstrecke mit dem ersten und dem zweiten übergeordneten Netzknoten sowie mit dem ersten Netzelement und dem zweiten Netzelement, wobei der erste übergeordnete Netzknoten und der zweite übergeordnete Netzknoten detaillierter dargestellt sind - für den Fall der Datenübertragung vom ersten übergeordneten Netzknoten zum ersten bzw. zweiten Netzelement.
- **Figur 4**: zeigt schematisch ein Netzelement in detaillierterer Darstellung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

In Figur 1 ist schematisch eine Ansicht eines beispielhaften optischen Telekommunikationsnetzes 100 bzw. einer ringförmig geschlossenen optischen Übertragungsstrecke 150 mit einem ersten übergeordneten Netzknoten R2, einem zweiten übergeordneten Netzknoten R2' sowie mit einem ersten Netzelement R1-1 und einem zweiten Netzelement R1-2 dargestellt.

Gemäß dem in Figur 1 dargestellten Ausführungsbeispiel weist der erste übergeordnete Netzknoten R2 ein erstes optisches Netzknotenelement 11 auf und der zweite übergeordnete Netzknoten R2' weist ein zweites optisches Netzknotenelement 12 auf. Ferner weist das erste Netzelement R1-1 ein drittes optisches Netzknotenelement 21 auf und das zweite Netzelement R1-2 weist ein viertes optisches Netzknotenelement 22 auf. Bevorzugt ist es vorgesehen, dass das erste, zweite, dritte und vierte optische Netzknotenelement 11, 12, 21, 22 jeweils eine flexible Datenübertragungskapazität bezüglich des Empfangs von Daten über die optische Übertragungsstrecke 150 als auch bezüglich des Aussendens von Daten über die optische Übertragungsstrecke 150 aufweist. Ein optisches Netzknotenelement 11, 12, 21, 22 weist insbesondere wenigstens einen optischen Transponder sowie einen Multiplexer auf. Im Kontext der vorliegenden Erfindung bezeichnet ein Netzknotenelement 11, 12, 21, 22, welches insbesondere eine flexible Datenübertragungskapazität bezüglich des Empfangs von Daten über die optische Übertragungsstrecke bzw. bezüglich des Aussendens von Daten über die optische Übertragungsstrecke aufweist, ein solches optisches Netzknotenelement 11 ,12, 21, 22, welches insbesondere einen hinsichtlich seiner Datenübertragungsrate (im Sendemodus bzw. im Empfangsmodus) bzw. seines verwendeten Modulationsverfahrens flexiblen Transponder aufweist.

Aus dem schematisch dargestellten Beispiel der Anordnung der übergeordneten Netzknoten R2, R2' sowie der Netzelemente R1-1, R1-2 geht hervor, dass die Wegstrecke entlang der optischen Übertragungsstrecke 150 zwischen dem ersten optischen Netzknotenelement 11 (bzw. dem ersten übergeordneten Netzknoten R2) und dem dritten optischen Netzknotenelement 21 (bzw. dem ersten Netzelement R1-1) über einen ersten Signalpfad 151 (d.h. über die in der bildlichen Darstellung gemäß Figur 1 rechte Seite der ringförmig geschlossenen optischen Übertragungsstrecke 150) kürzer ist als über einen zweiten Signalpfad 152 (d.h. über die linke Seite der ringförmig geschlossenen optischen Übertragungsstrecke 150 gemäß Figur 1). In ähnlicher Weise sei angenommen (obwohl dies aus der Figur 1 nicht zwingend deutlich sichtbar hervorgeht), dass die Wegstrecke entlang der optischen Übertragungsstrecke 150 zwischen ebenfalls dem ersten optischen Netzknotenelement 11 (bzw. dem ersten übergeordneten Netzknoten R2) und dem vierten optischen Netzknotenelement 22 (bzw. dem zweiten Netzelement R1-2) über einen dritten Signalpfad 153 (d.h. über die in der bildlichen Darstellung gemäß Figur 1 rechte Seite der ringförmig geschlossenen optischen Übertragungsstrecke 150) kürzer ist als über einen vierten Signalpfad 154 (d.h. über die linke Seite der ringförmig geschlossenen optischen Übertragungsstrecke 150 gemäß Figur 1). Die Richtungspfeile des ersten, zweiten, dritten und vierten Signalpfades 151, 152, 153, 154 weisen jeweils (vom ersten bzw. zweiten Netzelement R1-1, R1-2) zum ersten übergeordneten Netzknoten R2.

In umgekehrter Richtung (d.h. vom ersten übergeordneten Netzknoten R2 weg in Richtung zum ersten bzw. zweiten Netzelement R1-1, R1-2) sind ebenfalls Signalpfade erfindungsgemäß vorgesehen, jedoch in Figur 1 der Einfachheit und Übersichtlichkeit halber nicht explizit gezeigt. Ein fünfter Signalpfad (in Figur 1 nicht dargestellt, nachfolgend jedoch mit dem Bezugszeichen 155 bezeichnet und entgegengesetzt zum ersten Signalpfad verlaufend) verläuft vom ersten übergeordneten Netzknoten R2 zum ersten Netzelement R1-1, ein sechster Signalpfad (in Figur 1 nicht dargestellt, nachfolgend jedoch mit dem Bezugszeichen 156 bezeichnet und entgegengesetzt zum zweiten Signalpfad verlaufend) verläuft vom ersten übergeordneten Netzknoten R2 über den zweiten übergeordneten Netzknoten R2' zum ersten Netzelement R1-1, ein siebter Signalpfad (in Figur 1 nicht dargestellt, nachfolgend jedoch mit dem Bezugszeichen 157 bezeichnet und entgegengesetzt zum dritten Signalpfad verlaufend) verläuft vom ersten übergeordneten Netzknoten R2 zum zweiten Netzelement R1-2 und ein achter Signalpfad (in Figur 1 nicht dargestellt, nachfolgend jedoch mit dem Bezugszeichen 158 bezeichnet und entgegengesetzt zum vierten Signalpfad verlaufend) verläuft vom ersten übergeordneten Netzknoten R2 über den zweiten übergeordneten Netzknoten R2' zum zweiten Netzelement R1-2.

Vom ersten Netzelement R1-1 wird erfindungsgemäß ein erstes optisches Signal S1 sowohl über den ersten als auch über den zweiten Signalpfad 151, 152 zum ersten übergeordneten Netzknoten R2 übertragen. Ferner wird erfindungsgemäß ein zweites optisches Signal S2 vom zweiten Netzelement R1-2 sowohl über den dritten als auch über den vierten Signalpfad 153, 154 zum ersten übergeordneten Netzknoten R2 übertragen. In Gegenrichtung (d.h. vom ersten übergeordneten Netzknoten R2 wird ebenfalls ein drittes Signal (in Figur 1 nicht dargestellt, nachfolgend jedoch mit dem Bezugszeichen S3 bezeichnet) zum ersten Netzelement R1-1 - über den fünften Signalpfad und über den sechsten Signalpfad 155, 156 - übertragen und ein viertes Signal (in Figur 1 nicht dargestellt, nachfolgend jedoch mit dem Bezugszeichen S4 bezeichnet) zum zweiten Netzelement R1-2 - über den siebten Signalpfad und über den achten Signalpfad 155, 156 - übertragen.

Bisher wurden lediglich die Signalpfade von bzw. zu dem zweiten übergeordneten Netzknoten R2 betrachtet. Bevorzugt ist das optische Telekommunikationsnetz 100 hinsichtlich des ersten und zweiten übergeordneten Netzknotens jedoch symmetrisch vorgesehen, so dass in analoger Weise (zur bisherigen Beschreibung eines ersten bis achten Signalpfades von und zu dem ersten übergeordneten Netzknoten R2) ein weiterer erster Signalpfad, ein weiterer zweiter Signalpfad, ein weiterer dritter Signalpfad, ein weiterer vierter Signalpfad, ein weiterer fünfter Signalpfad, ein weiterer sechster Signalpfad, ein weiterer siebter Signalpfad und ein weiterer achter Signalpfad von und zu dem zweiten übergeordneten Netzknoten R2' betrachtet werden kann.

In Figur 2 ist schematisch eine weitere Ansicht des beispielhaften optischen Telekommunikationsnetzes 100 bzw. der optischen Übertragungsstrecke 150 mit dem ersten und dem zweiten übergeordneten Netzknoten R2, R2' sowie mit dem ersten Netzelement R1-1 und dem zweiten Netzelement R1-2 dargestellt, wobei der erste übergeordnete Netzknoten R2 und der zweite übergeordnete Netzknoten R2' detaillierter dargestellt sind; betont ist in Figur 2 der Fall der Datenübertragung vom ersten bzw. zweiten Netzelement R1-1, R1-2 zum ersten übergeordneten Netzknoten R2: Das erste Netzelement R1-1 sendet das erste optische Signal S1 (unter Verwendung wenigstens einer ersten optischen Wellenlänge der optischen Übertragungsstrecke 150) zum ersten übergeordneten Netzknoten R2 und das zweite Netzelement R1-2 sendet das zweite optische Signal S2 (unter Verwendung wenigstens einer zweiten (von der ersten optischen Wellenlänge unterschiedlichen) optischen Wellenlänge der optischen Übertragungsstrecke 150) zum ersten übergeordneten Netzknoten R2. Das erste optische Signal S1 wird über den ersten Signalpfad 151 (in der Darstellung in Figur 2 ausgehend vom ersten Netzelement R1-1 nach rechts mehr oder weniger direkt zum Eingang (erster wellenlängenselektiver Schalter 111) des ersten übergeordneten Netzknotens R2) und über den zweiten Signalpfad 152 (in der Darstellung in Figur 2 ausgehend vom ersten Netzelement R1-1 nach links, wobei der zweite Signalpfad 152 über das zweite Netzelement R1-2 sowie den zweiten übergeordneten Netzknoten R2' führt bzw. verläuft) geführt. Das zweite optische Signal S2 wird über den dritten Signalpfad 153 (in der Darstellung in Figur 2 ausgehend vom zweiten Netzelement R1-2 nach rechts, über das erste Netzelement R1-1 zum Eingang (erster wellenlängenselektiver Schalter 111) des ersten übergeordneten Netzknotens R2) und über den vierten Signalpfad 154 (in der Darstellung in Figur 2 ausgehend vom zweiten Netzelement R1-2 nach links, wobei der vierte Signalpfad 154 über den zweiten übergeordneten Netzknoten R2' führt bzw. verläuft) geführt.

In Figur 3 ist schematisch eine weitere Ansicht des beispielhaften optischen Telekommunikationsnetzes 100 bzw. der optischen Übertragungsstrecke 150 mit dem ersten und dem zweiten übergeordneten Netzknoten R2, R2' sowie mit dem ersten Netzelement R1-1 und dem zweiten Netzelement R1-2 dargestellt, wobei der erste übergeordnete Netzknoten R2 und der zweite übergeordnete Netzknoten R2' detaillierter dargestellt sind; betont ist in Figur 3 der Fall der Datenübertragung vom ersten übergeordneten Netzknoten R2 zum ersten bzw. zweiten Netzelement R1-1, R1-2: Der erste übergeordnete Netzknoten R2 sendet das dritte optische Signal S3 (unter Verwendung wenigstens einer dritten optischen Wellenlänge der optischen Übertragungsstrecke 150) zum ersten Netzelement R1-1 und das vierte optische Signal S4 (unter Verwendung wenigstens einer vierten (von der dritten optischen Wellenlänge unterschiedlichen) optischen Wellenlänge der optischen Übertragungsstrecke 150) zum zweiten Netzelement R1-2. Das dritte optische Signal S3 wird über den fünften Signalpfad 155 (in der Darstellung in Figur 3 ausgehend vom ersten übergeordneten Netzknoten R2 nach rechts mehr oder weniger direkt zum Eingang des ersten Netzelements R1-1) und über den sechsten Signalpfad 156 (in der Darstellung in Figur 3 ausgehend vom ersten übergeordneten Netzknoten R2 nach links, wobei der sechste Signalpfad 156 über den zweiten übergeordneten Netzknoten R2' sowie das zweite Netzelement R1-2 führt bzw. verläuft) geführt. Das vierte optische Signal S4 wird über den siebten Signalpfad 157 (in der Darstellung in Figur 3 ausgehend vom ersten übergeordneten Netzknoten R2 nach rechts, über das erste Netzelement R1-1 zum Eingang des zweiten Netzelements R1-2) und über den achten Signalpfad 158 (in der Darstellung in Figur 3 ausgehend vom zweiten übergeordneten Netzknoten R2 nach links, wobei der achte Signalpfad 158 über den zweiten übergeordneten Netzknoten R2' führt bzw. verläuft) geführt. Schlussendlich kommt sowohl das dritte optische Signal S3 (zum ersten Netzelement R1-1) als auch das vierte optische Signal S4 (zum zweiten Netzelement R1-2) ausgesandt, wobei für beide Signale unterschiedliche Signalpfade möglich sind. Analog hierzu wird auch ein weiteres drittes optisches Signal S3' (zum ersten Netzelement R1-1) und ein weiteres viertes optisches Signal S4'(zum zweiten Netzelement R1-2) vom zweiten übergeordneten Netzknoten R2' ausgesandt, wobei wiederum für beide weiteren Signale unterschiedliche weitere Signalpfade möglich sind, die jedoch in der Figur 3 nicht detailliert dargestellt sind.

In Figur 4 ist schematisch ein Netzelement R1 (d.h. ein Netzelement analog dem ersten Netzelement R1-1 bzw. dem zweiten Netzelement R1-2) in detaillierterer Darstellung dargestellt. Das Netzelement R1 weist einen ersten Netzelementeingang 161 (in Figur 4 auf der rechten Seite, auf direktem Wege (oder höchstens über ein weiteres Netzelement R1-1 verlaufend) kommend vom ersten übergeordneten Netzknoten R2) und einen ersten Netzelementausgang 171 (in Figur 4 ebenfalls auf der rechten Seite, auf direktem Wege (oder höchstens über ein weiteres Netzelement R1-1 verlaufend) gehend zum ersten übergeordneten Netzknoten R2). Das Netzelement R1 weist weiterhin auch einen zweiten Netzelementeingang 162 (in Figur 4 auf der linken Seite, auf direktem Wege (oder höchstens über ein weiteres Netzelement R1-2 verlaufend) kommend vom zweiten übergeordneten Netzknoten R2') und einen zweiten Netzelementausgang 172 (in Figur 4 ebenfalls auf der linken Seite, auf direktem Wege (oder höchstens über ein weiteres Netzelement R1-2 verlaufend) gehend zum zweiten übergeordneten Netzknoten R2'). Das Netzelement R1 weist im Inneren insbesondere einen ersten Netzelementsplitter 181 zur Entnahme des auf dem ersten Netzelementeingang 161 ankommenden optischen Signals und einen zweiten Netzelementsplitter 182 zur Entnahme des auf dem zweiten Netzelementeingang 162 ankommenden optischen Signals auf; vom ersten Netzelementsplitter 181 und vom zweiten Netzelementsplitter 182 werden die jeweiligen entnommenen optischen Signale einem Netzelementschalter 180 zugeführt, der entweder das vom ersten Netzelementsplitter 181 kommende optische Signal oder das vom zweiten Netzelementsplitter 182 kommende optische Signal auswählt und der weiteren Verarbeitung innerhalb des Netzelements R1 zuführt. Ferner weist das Netzelement R1 insbesondere einen ersten Netzelementkoppler 191 und einen zweiten Netzelementkoppler 192 zur Addition eines durch das Netzelement generierten optischen Signals auf die jeweiligen Ausgänge des Netzelements R1. Der erste Netzelementkoppler 191 koppelt das im Netzelement generierte optische Signal auf den ersten Netzelementausgang 171 und der zweite Netzelementkoppler 192 koppelt das im Netzelement generierte optische Signal auf den zweiten Netzelementausgang 172, wobei das im Netzelement generierte optische Signal durch einen weiteren Netzelementsplitter 190 zum ersten Netzelementkoppler 191 und zum zweiten Netzelementkoppler 192 aufgeteilt wird.

Sowohl aus Figur 2 als auch aus Figur 3 geht hervor, dass der erste und zweite übergeordnete Netzknoten R2, R2' jeweils zwei wellenlängenselektive Schalter aufweisen: Der erste Netzknoten R2 weist einen ersten wellenlängenselektiven Schalter 111 und einen zweiten wellenlängenselektiven Schalter 112 auf und der zweite übergeordnete Netzknoten R2' weist einen dritten wellenlängenselektiven Schalter 113 und einen vierten wellenlängenselektiven Schalter 114 auf. Alle wellenlängenselektiven Schalter 111, 112, 113, 114 weisen (jeweils neben einem Eingang) jeweils Ausgänge auf, wobei die Ausgänge des ersten und zweiten wellenlängenselektiven Schalters 111, 112 mittels ersten optischen Kopplern 121 gekoppelt sind und als erste Ausgänge 115 bezeichnet werden, während die Ausgänge des dritten und vierten wellenlängenselektiven Schalters 113, 114 mittels zweiten optischen Kopplern 122 ebenfalls gekoppelt sind und als zweite Ausgänge 116 bezeichnet werden.

Mit den ersten optischen Kopplern 121 wird jeweils ein Ausgang des ersten wellenlängenselektiven Schalters 111 mit einem Ausgang des zweiten wellenlängenselektiven Schalters 112 gekoppelt (d.h. diese beiden Ausgänge bilden die beiden Eingänge eines der ersten optischen Koppler 121). Die ersten optischen Koppler 121 dienen der Verknüpfung von optischen Signalen - die an einem der Ausgänge des ersten wellenlängenselektiven Schalters 111 bzw. an einem der Ausgänge des zweiten wellenlängenselektiven Schalters 112 anliegen - entweder zur Weiterleitung vom ersten übergeordneten Netzknoten R2 zu einem anderen Punkt innerhalb des optischen Übertragungsstrecke 150 bzw. des optischen Telekommunikationsnetzes 100 oder aber zur Verarbeitung innerhalb des ersten übergeordneten Netzknotens R2. Die zur Auswertung bzw. Verarbeitung innerhalb des ersten übergeordneten Netzknotens R2 vorgesehenen Ausgänge der ersten optischen Koppler 121 bzw. wenigstens ein solcher Ausgang eines der ersten optischen Koppler 121 werden (bzw. wird) durch einen ersten Leistungsmonitor 131 überwacht, wobei der erste Leistungsmonitor 131 einen optischen Signalleistungsparameter (der optischen Signale auf dem überwachten Ausgang bzw. auf den überwachten Ausgängen der ersten optischen Koppler 121) überwacht. Durch einen ersten Schalter 141 des ersten übergeordneten Netzknotens R2 wird einer der ersten Ausgänge 115 ausgewählt und dem ersten übergeordneten Netzknoten R2 zur Verarbeitung des optischen (Eingangs)Signals weitergeleitet. Ein erster zur Weiterleitung vom ersten übergeordneten Netzknoten R2 zu einem anderen Punkt innerhalb des optischen Übertragungsstrecke 150 vorgesehener Ausgang A1 der ersten optischen Koppler 121 wird an einen ersten kombinierten Splitter-Koppler 125 weitergeleitet, der die optischen Signale dieses ersten Ausgangs A1 sowie weiterhin auch die ursprünglich vom ersten übergeordneten Netzknoten R2 generierten optischen Signale koppelt und sowohl in Richtung zum ersten Netzelement R1-1 in die optische Übertragungsstrecke 150 (in Figur 2 und 3 nach rechts) einspeist als auch zu einem dritten optischen Koppler 126 (zur Einspeisung, in Richtung zum zweiten übergeordneten Netzknoten R2', in die optische Übertragungsstrecke 150) überträgt. Der dritte optische Koppler 126 empfängt - neben den optischen Signalen vom ersten kombinierten Splitter-Koppler 125 - auch die optischen Signale eines zweiten zur Weiterleitung vom ersten übergeordneten Netzknoten R2 zu einem anderen Punkt innerhalb der optischen Übertragungsstrecke 150 vorgesehenen Ausgangs A2 der ersten optischen Kopplers 121 und speist diese optischen Signale in die optische Übertragungsstrecke 150 zur Übertragung zum zweiten übergeordneten Netzknoten R2' (in Figur 2 und 3 nach links) ein.

Mit den zweiten optischen Kopplern 122 wird jeweils ein Ausgang des dritten wellenlängenselektiven Schalters 113 mit einem Ausgang des vierten wellenlängenselektiven Schalters 114 gekoppelt (d.h. diese beiden Ausgänge bilden die beiden Eingänge eines der zweiten optischen Koppler 122). Die zweiten optischen Koppler 122 dienen der Verknüpfung von optischen Signalen - die an einem der Ausgänge des dritten wellenlängenselektiven Schalters 113 bzw. an einem der Ausgänge des vierten wellenlängenselektiven Schalters 114 anliegen - entweder zur Weiterleitung vom zweiten übergeordneten Netzknoten R2' zu einem anderen Punkt innerhalb des optischen Übertragungsstrecke 150 bzw. des optischen Telekommunikationsnetzes 100 oder aber zur Verarbeitung innerhalb des zweiten übergeordneten Netzknotens R2'. Die zur Auswertung bzw. Verarbeitung innerhalb des zweiten übergeordneten Netzknotens R2' vorgesehenen Ausgänge der zweiten optischen Koppler 122 bzw. wenigstens ein solcher Ausgang eines der zweiten optischen Koppler 122 werden (bzw. wird) durch einen zweiten Leistungsmonitor 132 überwacht, wobei der zweite Leistungsmonitor 132 ebenfalls einen optischen Signalleistungsparameter (der optischen Signale auf dem überwachten Ausgang bzw. auf den überwachten Ausgängen der zweiten optischen Koppler 122) überwacht. Durch einen zweiten Schalter 142 des zweiten übergeordneten Netzknotens R2' wird einer der zweiten Ausgänge 116 ausgewählt und dem zweiten übergeordneten Netzknoten R2' zur Verarbeitung des optischen (Eingangs)Signals weitergeleitet. Ein dritter zur Weiterleitung vom zweiten übergeordneten Netzknoten R2' zu einem anderen Punkt innerhalb des optischen Übertragungsstrecke 150 vorgesehener Ausgang A3 der zweiten optischen Koppler 122 wird an einen zweiten kombinierten Splitter-Koppler 127 weitergeleitet, der die optischen Signale dieses dritten Ausgangs A3 sowie weiterhin auch die ursprünglich vom zweiten übergeordneten Netzknoten R2' generierten optischen Signale koppelt und sowohl in Richtung zum zweiten Netzelement R1-2 in die optische Übertragungsstrecke 150 (in Figur 2 und 3 nach links) einspeist als auch zu einem vierten optischen Koppler 128 (zur Einspeisung, in Richtung zum ersten übergeordneten Netzknoten R2, in die optische Übertragungsstrecke 150) überträgt. Der vierte optische Koppler 128 empfängt - neben den optischen Signalen vom zweiten kombinierten Splitter-Koppler 127 - auch die optischen Signale eines vierten, zur Weiterleitung vom zweiten übergeordneten Netzknoten R2' zu einem anderen Punkt innerhalb der optischen Übertragungsstrecke 150 vorgesehenen Ausgangs A4 der zweiten optischen Kopplers 122 und speist diese optischen Signale in die optische Übertragungsstrecke 150 zur Übertragung zum ersten übergeordneten Netzknoten R2 (in Figur 2 und 3 nach rechts) ein.

Erfindungsgemäß sind insbesondere für jeden zu betrachtenden Betriebsmodus des optischen Telekommunikationsnetzes 100 einer der ersten Ausgänge 115 (und einer der zweiten Ausgänge 116) vorhanden. Mittels des ersten bzw. zweiten Schalters 141, 142 ist es möglich, eine schnelle Umschaltung der optischen Verbindungen auf der optischen Übertragungsstrecke 150 herbeizuführen. Hierdurch können sehr kurze Umschaltzeiten zur Heilung der optischen Verbindung realisiert werden (die insbesondere derart kurz sind (wenige Millisekunden bis einige 10 Millisekunden), dass keine Konfigurationsänderung auf der IP-Ebene zwingend erforderlich ist - lediglich müssen die ersten und zweiten Schalter ggf. miteinander synchronisiert (bzw. aufeinander abgestimmt) geschaltet werden. Die wellenlängenselektiven Schalter 111, 112,113, 114 sind insbesondere als fest voreingestellte optische Filterbänke (innerhalb der übergeordneten Netzknoten R2, R2') vorgesehen und halten für jeden Fehlerfall jeweils am Ausgang ein optimal gefiltertes WDM-Spektrum bereit. Die WDM-Spektren aus beiden Richtungen (d.h. am ersten und am zweiten wellenlängenselektiven Schalter 111, 112 bzw. am dritten und am vierten wellenlängenselektiven Schalter 113, 114) werden jeweils mit optischen Kopplern addiert - hierzu können insbesondere einfache optische Koppler Verwendung finden. Der ersten bzw. zweite Schalter 141, 142 ist insbesondere als ein schneller optischer Multischalter ausgebildet und wählt im Fehlerfall - gesteuert durch beispielsweise einen bevorzugt einfachen multiport-Powermeter oder aber einen spektral auflösenden multiport-Monitor als Leistungsmonitor - dasjenige WDM-Spektrum aus, das alle optischen Übertragungskanäle (d.h. alle auf der optischen Übertragungsstrecke 150 verwendeten Wellenlängen) enthält.

Die optischen Filterbänke werden insbesondere durch zwei komplementäre und regelbare WSS-Baugruppen (bzw. wellenlängenselektive Schalter) realisiert. Die wellenlängenselektiven Schalter 111, 112, 113, 114 werden erfindungsgemäß vor Eintritt eines Fehlers geeignet eingestellt. Alternativ könnten die wellenlängenselektiven Schalter auch durch feste Filterstrukturen ersetzt werden, was allerdings den Nachteil hätte, dass eine beliebige Wellenlängenzuordnung bzw. -änderung während der Betriebsphase nicht oder nur mit zusätzlichem Aufwand möglich wäre.

Da die optische Übertragungsstrecke 150 bei einer Anzahl von n Netzelementen (R1-1, R1-2, ...)
n +2
Fasersegmente aufweist, ist es vorteilhaft, wenn
n + 3
erste bzw. zweite Ausgänge 115, 116 vorhanden sind, so dass für jeden Fehlerfall(betriebsmodus) (etwa ein Faserbruch auf einem Fasersegment) und zusätzlich auch für den Normalbetriebsmodus jeweils einer der ersten und einer der zweiten Ausgänge 115, 116 vorhanden ist.

## Patentansprüche

1. Verfahren zur effizienteren Datenübertragung in einem optischen Telekommunikationsnetz (100) im Wellenlängen-Multiplex-Betrieb von verschiedenen optischen Wellenlängen, wobei das optische Telekommunikationsnetz (100) einen ersten übergeordneten Netzknoten (R2), einen zweiten übergeordneten Netzknoten (R2') und ferner eine Mehrzahl von Netzelementen (R1-1, R1-2) aufweist, wobei die Mehrzahl von Netzelementen (R1-1, R1-2) wenigstens ein erstes Netzelement (R1-1) und ein zweites Netzelement (R1-2) aufweist, wobei das Telekommunikationsnetz (100) eine optische Übertragungsstrecke (150) aufweist, wobei die optische Übertragungsstrecke (150) den ersten übergeordneten Netzknoten (R2) und das erste Netzelement (R1-1) sowie das erste Netzelement (R1-1) und das zweite Netzelement (R1-2) sowie ferner das zweite Netzelement (R1-2) und den zweiten übergeordneten Netzknoten (R2') direkt oder indirekt miteinander verbindet, wobei die optische Übertragungsstrecke (150) weiterhin auch den ersten übergeordneten Netzknoten (R2) und den zweiten übergeordneten Netzknoten (R2') miteinander verbindet, so dass die optische Übertragungsstrecke (150) topologisch ringförmig geschlossen ist, wobei über die ringförmig geschlossene optische Übertragungsstrecke (150)
-- zwischen dem ersten Netzelement (R1-1) und dem ersten übergeordneten Netzknoten (R2) in Richtung vom ersten Netzelement (R1-1) zum ersten übergeordneten Netzknoten (R2) ein erster Signalpfad (151) verläuft,
-- zwischen dem ersten Netzelement (R1-1) und dem zweiten übergeordneten Netzknoten (R2') in Richtung vom ersten Netzelement (R1-1) zum zweiten übergeordneten Netzknoten (R2') ein zweiter Signalpfad (152) verläuft, wobei der zweite Signalpfad (152) zusätzlich vom zweiten übergeordneten Netzknoten (R2') zum ersten übergeordneten Netzknoten (R2) verläuft,
-- zwischen dem zweiten Netzelement (R1-2) und dem ersten übergeordneten Netzknoten (R2) in Richtung vom zweiten Netzelement (R1-2) zum ersten übergeordneten Netzknoten (R2) ein dritter Signalpfad (153) verläuft und
-- zwischen dem zweiten Netzelement (R1-2) und dem zweiten übergeordneten Netzknoten (R2') in Richtung vom zweiten Netzelement (R1-2) zum zweiten übergeordneten Netzknoten (R2') ein vierter Signalpfad (154) verläuft, wobei der vierte Signalpfad (154) zusätzlich vom zweiten übergeordneten Netzknoten (R2') zum ersten übergeordneten Netzknoten (R2) verläuft,
wobei auf der optischen Übertragungsstrecke (150) der erste und zweite Signalpfad (151, 152) sowie der dritte und vierte Signalpfad (153, 154) jeweils disjunkt sind und sich jeweils zur optischen Übertragungsstrecke (150) ergänzen und wobei ein erstes optisches Signal (S1) vom ersten Netzelement (R1-1) zum ersten übergeordneten Netzknoten (R2) sowohl über den ersten Signalpfad (151) als auch über den zweiten Signalpfad (152) und ein zweites optisches Signal (S2) vom zweiten Netzelement (R1-2) zum ersten übergeordneten Netzknoten (R2) sowohl über den dritten Signalpfad (153) als auch über den vierten Signalpfad (154) übertragen wird, wobei das optische Telekommunikationsnetz (100) in einer Mehrzahl von Betriebsmodi betreibbar ist, wobei die Mehrzahl von Betriebsmodi wenigstens einen Normalbetriebsmodus und wenigstens einen ersten und einen zweiten Fehlerfallbetriebsmodus aufweist,
wobei der erste übergeordnete Netzknoten (R2) bezüglich des ersten und dritten Signalpfades (151, 153) einen ersten wellenlängenselektiven Schalter (111) und bezüglich des zweiten und vierten Signalpfades (152, 154) einen zweiten wellenlängenselektiven Schalter (112) aufweist, wobei der erste und zweite wellenlängenselektive Schalter (111, 112) erste Ausgänge (115) derart aufweisen, dass jedem der ersten Ausgänge (115) einem der Mehrzahl von Betriebsmodi des optischen Telekommunikationsnetzes (100) zugeordnet ist, und wobei das Verfahren den Schritt umfasst, dass in Abhängigkeit des Betriebsmodus des optischen Telekommunikationsnetzes (100) durch den ersten übergeordneten Netzknoten (R2) der dem jeweils vorliegenden Betriebsmodus des optischen Telekommunikationsnetzes (100) zugeordnete der ersten Ausgänge (115) zum Empfang des ersten optischen Signals (S1) und des zweiten optischen Signals (S2) ausgewertet wird,
**dadurch gekennzeichnet, dass** die optischen Signale der ersten Ausgänge (115) des ersten und zweiten wellenlängenselektiven Schalters (111, 112) jeweils einer optischen Addition des jeweiligen Ausgangs des ersten wellenlängenselektiven Schalters (111) und des zweiten wellenlängenselektiven Schalters (112) mittels optischer Koppler (121) entsprechen.

2. Verfahren nach Anspruch 1, **dadurch gekennzeichnet, dass**
-- zwischen dem ersten übergeordneten Netzknoten (R2) und dem ersten Netzelement (R1-1) in Richtung vom ersten übergeordneten Netzknoten (R2) zum ersten Netzelement (R1-1) ein fünfter Signalpfad (155) verläuft,
-- zwischen dem ersten übergeordneten Netzknoten (R2) und dem ersten Netzelement (R1-1) in Richtung vom ersten übergeordneten Netzknoten (R2) über den zweiten übergeordneten Netzknoten (R2') zum ersten Netzelement (R1-1) ein sechster Signalpfad (156) verläuft,
-- zwischen dem ersten übergeordneten Netzknoten (R2) und dem zweiten Netzelement (R1-2) in Richtung vom ersten übergeordneten Netzknoten (R2) zum zweiten Netzelement (R1-2) ein siebter Signalpfad (157) verläuft, und
-- zwischen dem ersten übergeordneten Netzknoten (R2) und dem zweiten Netzelement (R1-2) in Richtung vom ersten übergeordneten Netzknoten (R2) über den zweiten übergeordneten Netzknoten (R2') zum zweiten Netzelement (R1-2) ein achter Signalpfad (158) verläuft,
wobei auf der optischen Übertragungsstrecke (150) der fünfte und sechste Signalpfad (155, 156) sowie der siebte und achte Signalpfad (157, 158) jeweils disjunkt sind und sich jeweils zur optischen Übertragungsstrecke (150) ergänzen und wobei ein drittes optisches Signal (S3) vom ersten übergeordneten Netzknoten (R2) zum ersten Netzelement (R1-1) sowohl über den fünften Signalpfad (155) als auch über den sechsten Signalpfad (156) und ein viertes optisches Signal (S4) vom ersten übergeordneten Netzknoten (R2) zum zweiten Netzelement (R1-2) sowohl über den siebten Signalpfad (157) als auch über den achten Signalpfad (158) übertragen wird, wobei der zweite übergeordnete Netzknoten (R2') bezüglich des sechsten und achten Signalpfades (156, 158) einen vierten wellenlängenselektiven Schalter (114) aufweist, wobei der vierte wellenlängenselektive Schalter (114) zweite Ausgänge (116) derart aufweist, dass jedem der zweiten Ausgänge (116) einer der Mehrzahl von Betriebsmodi des optischen Telekommunikationsnetzes (100) zugeordnet ist, und wobei das Verfahren den Schritt umfasst, dass durch den zweiten übergeordneten Netzknoten (R2') das dritte optische Signal (S3) und/oder das vierte optische Signal (S4) zum ersten und/oder zweiten Netzelement (R1-1, R1-2) weitergeleitet werden.

3. Verfahren nach einem der vorhergehenden Ansprüche, **dadurch gekennzeichnet, dass** der erste übergeordnete Netzknoten (R2) einen ersten Leistungsmonitor (131) und einen ersten optischen Schalter (141) aufweist, wobei die Auswertung - zum Empfang des ersten optischen Signals (S1) und des zweiten optischen Signals (S2) durch den ersten übergeordneten Netzknoten (R2) - des dem jeweils vorliegenden Betriebsmodus des optischen Telekommunikationsnetzes (100) zugeordneten Ausgang der ersten Ausgänge (115) die folgenden Teilschritte umfasst:
-- in einem ersten Teilschritt wird ein bestimmter, dem vorliegenden Betriebsmodus des optischen Telekommunikationsnetzes (100) zugeordneter Ausgang der ersten Ausgänge (115) ausgewertet, wobei ein optischer Signalleistungsparameter wenigstens eines der ersten Ausgänge (115) durch den ersten Leistungsmonitor (131) erfasst wird,
-- in einem nachfolgenden zweiten Teilschritt wird entschieden, ob der im ersten Teilschritt erfasste Wert des optischen Signalleistungsparameters einen Wechsel hin zur Auswertung eines gegenüber dem bestimmten Ausgang anderen Ausgangs der ersten Ausgänge (115) indiziert,
-- in einem nachfolgenden dritten Teilschritt wird - für den Fall, dass der erfasste Wert des optischen Signalleistungsparameters einen Wechsel des Ausgangs der ersten Ausgänge (115) indiziert - der erste Schalter (141) des ersten übergeordneten Netzknotens (R2) zur Auswertung des anderen Ausgangs betätigt, oder - für den Fall das der erfasste Wert des optischen Signalleistungsparameters keinen Wechsel des Ausgangs der ersten Ausgänge (115) indiziert - zum ersten Teilschritt verzweigt.

4. Verfahren nach Anspruch 3, **dadurch gekennzeichnet, dass** der optische Signalleistungsparameter des dem Normalbetriebsmodus entsprechenden Ausgangs der ersten Ausgänge (115) durch den ersten Leistungsmonitor (131) erfasst wird oder dass die optischen Signalleistungsparameter aller ersten Ausgänge (115) durch den ersten Leistungsmonitor (131) erfasst werden.

5. Verfahren nach einem der vorhergehenden Ansprüche, **dadurch gekennzeichnet, dass** die Erfassung und die Auswertung des optischen Signalleistungsparameters und die Betätigung des ersten Schalters (141) des ersten übergeordneten Netzknotens (R2) innerhalb eines Zeitintervalls nach Eintreten des Fehlerfalls erfolgt, wobei das Zeitintervall kleiner als bis maximal gleich 100 Millisekunden ist.

6. Optisches Telekommunikationsnetz (100) zur effizienteren Datenübertragung im Wellenlängen-Multiplex-Betrieb von verschiedenen optischen Wellenlängen, wobei das optische Telekommunikationsnetz (100) einen ersten übergeordneten Netzknoten (R2), einen zweiten übergeordneten Netzknoten (R2') und ferner eine Mehrzahl von Netzelementen (R1-1, R1-2) aufweist, wobei die Mehrzahl von Netzelementen (R1-1, R1-2) wenigstens ein erstes Netzelement (R1-1) und ein zweites Netzelement (R1-2) aufweist, wobei das Telekommunikationsnetz (100) eine optische Übertragungsstrecke (150) aufweist, wobei die optische Übertragungsstrecke (150) den ersten übergeordneten Netzknoten (R2) und das erste Netzelement (R1-1) sowie das erste Netzelement (R1-1) und das zweite Netzelement (R1-2) sowie ferner das zweite Netzelement (R1-2) und den zweiten übergeordneten Netzknoten (R2') direkt oder indirekt miteinander verbindet, wobei die optische Übertragungsstrecke (150) weiterhin auch den ersten übergeordneten Netzknoten (R2) und den zweiten übergeordneten Netzknoten (R2') miteinander verbindet, so dass die optische Übertragungsstrecke (150) topologisch ringförmig geschlossen ist, wobei über die ringförmig geschlossene optische Übertragungsstrecke (150)
-- zwischen dem ersten Netzelement (R1-1) und dem ersten übergeordneten Netzknoten (R2) in Richtung vom ersten Netzelement (R1-1) zum ersten übergeordneten Netzknoten (R2) ein erster Signalpfad (151) verläuft,
-- zwischen dem ersten Netzelement (R1-1) und dem zweiten übergeordneten Netzknoten (R2') in Richtung vom ersten Netzelement (R1-1) zum zweiten übergeordneten Netzknoten (R2') ein zweiter Signalpfad (152) verläuft, wobei der zweite Signalpfad (152) zusätzlich vom zweiten übergeordneten Netzknoten (R2') zum ersten übergeordneten Netzknoten (R2) verläuft,
-- zwischen dem zweiten Netzelement (R1-2) und dem ersten übergeordneten Netzknoten (R2) in Richtung vom zweiten Netzelement (R1-2) zum ersten übergeordneten Netzknoten (R2) ein dritter Signalpfad (153) verläuft und
-- zwischen dem zweiten Netzelement (R1-2) und dem zweiten übergeordneten Netzknoten (R2') in Richtung vom zweiten Netzelement (R1-2) zum zweiten übergeordneten Netzknoten (R2') ein vierter Signalpfad (154) verläuft, wobei der vierte Signalpfad (154) zusätzlich vom zweiten übergeordneten Netzknoten (R2') zum ersten übergeordneten Netzknoten (R2) verläuft,
wobei auf der optischen Übertragungsstrecke (150) der erste und zweite Signalpfad (151, 152) sowie der dritte und vierte Signalpfad (153, 154) jeweils disjunkt sind und sich jeweils zur optischen Übertragungsstrecke (150) ergänzen und wobei das optische Telekommunikationsnetz (100) derart konfiguriert ist, dass ein erstes optisches Signal (S1) vom ersten Netzelement (R1-1) zum ersten übergeordneten Netzknoten (R2) sowohl über den ersten Signalpfad (151) als auch über den zweiten Signalpfad (152) und ein zweites optisches Signal (S2) vom zweiten Netzelement (R1-2) zum ersten übergeordneten Netzknoten (R2) sowohl über den dritten Signalpfad (153) als auch über den vierten Signalpfad (154) übertragen wird,
wobei das optische Telekommunikationsnetz (100) in einer Mehrzahl von Betriebsmodi betreibbar ist, wobei die Mehrzahl von Betriebsmodi wenigstens einen Normalbetriebsmodus und wenigstens einen ersten und einen zweiten Fehlerfallbetriebsmodus aufweist,
wobei der erste übergeordnete Netzknoten (R2) bezüglich des ersten und dritten Signalpfades (151, 153) einen ersten wellenlängenselektiven Schalter (111) und bezüglich des zweiten und vierten Signalpfades (152, 154) einen zweiten wellenlängenselektiven Schalter (112) aufweist, wobei der erste und zweite wellenlängenselektive Schalter (111, 112) erste Ausgänge (115) derart aufweisen, dass jedem der ersten Ausgänge (115) einem der Mehrzahl von Betriebsmodi des optischen Telekommunikationsnetzes (100) zugeordnet ist, und wobei das optische Telekommunikationsnetz (100) derart konfiguriert ist, dass in Abhängigkeit des Betriebsmodus des optischen Telekommunikationsnetzes (100) durch den ersten übergeordneten Netzknoten (R2) der dem jeweils vorliegenden Betriebsmodus des optischen Telekommunikationsnetzes (100) zugeordnete der ersten Ausgänge (115) zum Empfang des ersten optischen Signals (S1) und des zweiten optischen Signals (S2) ausgewertet wird,
**dadurch gekennzeichnet, dass** die optischen Signale der ersten Ausgänge (115) des ersten und zweiten wellenlängenselektiven Schalters (111, 112) jeweils einer optischen Addition des jeweiligen Ausgangs des ersten wellenlängenselektiven Schalters (111) und des zweiten wellenlängenselektiven Schalters (112) mittels optischer Koppler (121) entsprechen.

7. Optisches Telekommunikationsnetz (100) nach Anspruch 6, **dadurch gekennzeichnet, dass**
-- zwischen dem ersten übergeordneten Netzknoten (R2) und dem ersten Netzelement (R1-1) in Richtung vom ersten übergeordneten Netzknoten (R2) zum ersten Netzelement (R1-1) ein fünfter Signalpfad (155) verläuft,
-- zwischen dem ersten übergeordneten Netzknoten (R2) und dem ersten Netzelement (R1-1) in Richtung vom ersten übergeordneten Netzknoten (R2) über den zweiten übergeordneten Netzknoten (R2') zum ersten Netzelement (R1-1) ein sechster Signalpfad (156) verläuft,
-- zwischen dem ersten übergeordneten Netzknoten (R2) und dem zweiten Netzelement (R1-2) in Richtung vom ersten übergeordneten Netzknoten (R2) zum zweiten Netzelement (R1-2) ein siebter Signalpfad (157) verläuft, und
-- zwischen dem ersten übergeordneten Netzknoten (R2) und dem zweiten Netzelement (R1-2) in Richtung vom ersten übergeordneten Netzknoten (R2) über den zweiten übergeordneten Netzknoten (R2') zum zweiten Netzelement (R1-2) ein achter Signalpfad (158) verläuft,
wobei auf der optischen Übertragungsstrecke (150) der fünfte und sechste Signalpfad (155, 156) sowie der siebte und achte Signalpfad (157, 158) jeweils disjunkt sind und sich jeweils zur optischen Übertragungsstrecke (150) ergänzen und wobei das optische Telekommunikationsnetz (100) derart konfiguriert ist, dass ein drittes optisches Signal (S3) vom ersten übergeordneten Netzknoten (R2) zum ersten Netzelement (R1-1) sowohl über den fünften Signalpfad (155) als auch über den sechsten Signalpfad (156) und ein viertes optisches Signal (S4) vom ersten übergeordneten Netzknoten (R2) zum zweiten Netzelement (R1-2) sowohl über den siebten Signalpfad (157) als auch über den achten Signalpfad (158) übertragen wird, wobei der zweite übergeordnete Netzknoten (R2') bezüglich des sechsten und achten Signalpfades (156, 158) einen vierten wellenlängenselektiven Schalter (114) aufweist, wobei der vierte wellenlängenselektive Schalter (114) zweite Ausgänge (116) derart aufweist, dass jedem der zweiten Ausgänge (116) einer der Mehrzahl von Betriebsmodi des optischen Telekommunikationsnetzes (100) zugeordnet ist, und wobei das optische Telekommunikationsnetz (100) derart konfiguriert ist, dass durch den zweiten übergeordneten Netzknoten (R2') das dritte optische Signal (S3) und/oder das vierte optische Signal (S4) zum ersten und/oder zweiten Netzelement (R1-1, R1-2) weitergeleitet werden.

8. Optisches Telekommunikationsnetz (100) nach einem der Ansprüche 6 oder 7, **dadurch gekennzeichnet, dass** der erste übergeordnete Netzknoten (R2) einen ersten Leistungsmonitor (131) und einen ersten optischen Schalter (141) aufweist, wobei das optische Telekommunikationsnetz (100) derart konfiguriert ist, dass zur Auswertung - zum Empfang des ersten optischen Signals (S1) und des zweiten optischen Signals (S2) durch den ersten übergeordneten Netzknoten (R2) - des dem jeweils vorliegenden Betriebsmodus des optischen Telekommunikationsnetzes (100) zugeordneten Ausgangs der ersten Ausgänge (115) optischer Signalleistungsparameter wenigstens eines der ersten Ausgänge (115) durch den ersten Leistungsmonitor (131) erfasst und in Abhängigkeit des erfassten Werts des optischen Signalleistungsparameters durch Betätigen des ersten Schalters (141) ein Wechsel des Ausgangs der ersten Ausgänge (115) vorgenommen wird.

9. Computerprogramm mit Programmcodemitteln, mit deren Hilfe alle Schritte eines Verfahrens nach einem der Ansprüche 1 bis 5 durchführbar sind, wenn das Computerprogramm auf einer programmierbaren Einrichtung und/oder einem übergeordneten Netzknoten (R2) ausgeführt wird.

10. Computerprogrammprodukt mit einem computerlesbaren Medium und einem auf dem computerlesbaren Medium gespeicherten Computerprogramm mit Programmcodemitteln, die dazu geeignet sind, dass alle Schritte eines Verfahrens nach einem der Ansprüche 1 bis 5 durchführbar sind, wenn das Computerprogramm auf einer programmierbaren Einrichtung und/oder einem übergeordneten Netzknoten (R2) ausgeführt wird.

## Claims

1. Method for more efficient data transmission, in an optical telecommunications network (100) in wavelength-multiplex operation, of different optical wavelengths, the optical telecommunications network (100) comprising a first superordinate network node (R2), a second superordinate network node (R2') and further a plurality of network elements (R1-1, R1-2), the plurality of network elements (R1-1, R1-2) comprising at least a first network element (R1-1) and a second network element (R-2), the telecommunications network (100) comprising an optical transmission link (150), the optical transmission link (150) directly or indirectly interconnecting the first superordinate network node (R2) and the first network element (R1-1), as well as the first network element (R1-1) and the second network element (R1-2), as well as, further, the second network element (R1-2) and the second superordinate network node (R2'), the optical transmission link (150) also further interconnecting the first superordinate network node (R2) and the second superordinate network node (R2'), in such a way that the optical transmission link (150) is topologically annularly closed, and, via the annularly closed optical transmission link (150) :
- a first signal path (151) extending between the first network element (R1-1) and the first superordinate network node (R2) in the direction from the first network element (R1-1) to the first superordinate network node (R2),
- a second signal path (152) extending between the first network element (R1-1) and the second superordinate network node (R2') in the direction from the first network element (R1-1) to the second superordinate network node (R2), the second signal path (152) additionally extending from the second superordinate network node (R2') to the first superordinate network node (R2),
- a third signal path (153) extending between the second network element (R1-2) and the first superordinate network node (R2) in the direction from the second network element (R1-2) to the first superordinate network node (R2), and
- a fourth signal path (154) extending between the second network element (R1-2) and the second superordinate network node (R2') in the direction from the second network element (R1-2) to the second superordinate network node (R2'), the fourth signal path (154) additionally extending from the second superordinate network node (R2') to the first superordinate network node (R2),
the first and second signal path (151, 152) and the third and fourth signal path (153, 154) in each case being disjunct on the optical transmission link (150) and in each case combining to form the optical transmission link (150), and a first optical signal (S1) being transmitted from the first network element (R1-1) to the first superordinate network node (R2) both via the first signal path (151) and via the second signal path (152) and a second optical signal (S2) being transmitted from the second network element (R1-2) to the first superordinate network node (R2) both via the third signal path (153) and via the fourth signal path (154), the optical telecommunications network (100) being operable in a plurality of operating modes, the plurality of operating modes comprising at least one normal operating mode and at least a first and a second error scenario operating mode,
the first superordinate network node (R2) comprising a first wavelength-selective switch (111) for the first and third signal path (151, 153) and a second wavelength-selective switch (112) for the second and fourth signal path (152, 154), the first and second wavelength-selective switch (111, 112) comprising first outputs (115) in such a way that one of the plurality of operating modes of the optical telecommunications network (100) is assigned to each of the first outputs (115), and the method comprising the step whereby, as a function of the operating mode of the optical telecommunications network (100), the one of the first outputs (115) assigned to the respectively present operating mode of the optical telecommunications network (100) is evaluated by the first superordinate network node (R2) for receiving the first optical signal (S1) and the second optical signal (S2),
**characterised in that** the optical signals of the first outputs (115) of the first and second wavelength-selective switch (111, 112) each correspond to an optical addition of the associated output of the first wavelength-selective switch (111) and the second wavelength-selective switch (112) by means of optical couplers (121).

2. Method according to claim 1, **characterised in that**
- a fifth signal path (155) extends between the first superordinate network node (R2) and the first network element (R1-1) in the direction from the first superordinate network node (R2) to the first network element (R1-1),
- a sixth signal path (156) extends between the first superordinate network node (R2) and the first network element (R1-1) in the direction from the first superordinate network node (R2) via the second superordinate network node (R2') to the first network element (R1-1),
- a seventh signal path (157) extends between the first superordinate network node (R2) and the second network element (R1-2) in the direction from the first superordinate network node (R2) to the second network element (R1-2),
- an eighth signal path (158) extends between the first superordinate network node (R2) and the second network element (R1-2) in the direction from the first superordinate network node (R2) via the second superordinate network node (R2') to the second network element (R1-2),
the fifth and sixth signal path (155, 156) and the seventh and eighth signal path (157, 158) in each case being disjunct on the optical transmission link (150) and in each case combining to form the optical transmission link (150), and a third optical signal (S3) being transmitted from the first superordinate network node (R2) to the first network element (R1-1) both via the fifth signal path (155) and via the sixth signal path (156) and a fourth optical signal (S4) being transmitted from the first superordinate network node (R2) to the second network element (R1-2) both via the seventh signal path (157) and via the eighth signal path (158),
the second superordinate network node (R2') comprising a fourth wavelength-selective switch (114) for the sixth and eighth signal path (156, 158), the fourth wavelength-selective switch (114) comprising second outputs (116) in such a way that one of the plurality of operating modes of the optical telecommunications network (100) is assigned to each of the second outputs (116), and the method comprising the step whereby the third optical signal (S3) and/or the fourth optical signal (S4) are passed on to the first and/or second network element (R1-1, R1-2) by the second superordinate network node (R2').

3. Method according to either of the preceding claims, **characterised in that** the first superordinate network node (R2) comprises a first power monitor (131) and a first optical switch (141), the evaluation - for receiving the first optical signal (S1) and the second optical signal (S2) by the first superordinate network node (R2) - of the one of the first outputs (115) assigned to the respectively present operating mode of the optical telecommunications network (100) comprising the following sub-steps:
- in a first sub-step, a particular one of the first outputs (115) which is assigned to the present operating mode of the optical telecommunications network (100) is evaluated, an optical signal power parameter of at least one of the first outputs (115) being detected by the first power monitor (131),
- in a following, second sub-step, it is decided whether the value detected in the first sub-step of the optical power parameter indicates a change towards evaluation of one of the first outputs (115) other than the particular output,
- in a following, third sub-step, either the first switch (141) of the first superordinate network node (R2) is actuated to evaluate the other output - if the detected value of the optical signal power parameter indicates a change in the one of the first outputs (115) - or the method branches to the first sub-step - if the detected value of the optical signal power parameter does not indicate a change in the one of the first outputs (115) .

4. Method according to claim 3, **characterised in that** the optical signal power parameter of the one of the first outputs (115) corresponding to the normal operating mode is detected by the first power monitor (131) or **in that** the optical signal power parameters of all first outputs (115) are detected by the first power monitor (131).

5. Method according to any of the preceding claims, **characterised in that** the detection and evaluation of the optical signal power parameter and the actuation of the first switch (141) of the first superordinate network node (R2) take place within a time interval after the error scenario occurs, the time interval being less than or at most equal to 100 milliseconds.

6. Optical telecommunications network (100) for more efficient data transmission, in wavelength-multiplex operation, of different optical wavelengths, the optical telecommunications network (100) comprising a first superordinate network node (R2), a second superordinate network node (R2') and further a plurality of network elements (R1-1, R1-2), the plurality of network elements (R1-1, R1-2) comprising at least a first network element (R1-1) and a second network element (R-2), the telecommunications network (100) comprising an optical transmission link (150), the optical transmission link (150) directly or indirectly interconnecting the first superordinate network node (R2) and the first network element (R1-1), as well as the first network element (R1-1) and the second network element (R1-2), as well as, further, the second network element (R1-2) and the second superordinate network node (R2'), the optical transmission link (150) also further interconnecting the first superordinate network node (R2) and the second superordinate network node (R2'), in such a way that the optical transmission link (150) is topologically annularly closed, and, via the annularly closed optical transmission link (150) :
- a first signal path (151) extending between the first network element (R1-1) and the first superordinate network node (R2) in the direction from the first network element (R1-1) to the first superordinate network node (R2),
- a second signal path (152) extending between the first network element (R1-1) and the second superordinate network node (R2') in the direction from the first network element (R1-1) to the second superordinate network node (R2), the second path (152) additionally extending from the second superordinate network node (R2') to the first superordinate network node (R2),
- a third signal path (153) extending between the second network element (R1-2) and the first superordinate network node (R2) in the direction from the second network element (R1-2) to the first superordinate network node (R2), and
- a fourth signal path (154) extending between the second network element (R1-2) and the second superordinate network node (R2') in the direction from the second network element (R1-2) to the second superordinate network node (R2'), the fourth signal path (154) additionally extending from the second superordinate network node (R2') to the first superordinate network node (R2),
the first and second signal path (151, 152) and the third and fourth signal path (153, 154) in each case being disjunct on the optical transmission link (150) and in each case combining to form the optical transmission link (150), and the optical telecommunications network (100) being configured in such a way that a first optical signal (S1) is transmitted from the first network element (R1-1) to the first superordinate network node (R2) both via the first signal path (151) and via the second signal path (152) and a second optical signal (S2) is transmitted from the second network element (R1-2) to the first superordinate network node (R2) both via the third signal path (153) and via the fourth signal path (154), the optical telecommunications network (100) being operable in a plurality of operating modes, the plurality of operating modes comprising at least one normal operating mode and at least a first and a second error scenario operating mode,
the first superordinate network node (R2) comprising a first wavelength-selective switch (111) for the first and third signal path (151, 153) and a second wavelength-selective switch (112) for the second and fourth signal path (152, 154), the first and second wavelength-selective switch (111, 112) comprising first outputs (115) in such a way that one of the plurality of operating modes of the optical telecommunications network (100) is assigned to each of the first outputs (115), and the optical telecommunications network being configured in such a way that, as a function of the operating mode of the optical telecommunications network (100), the one of the first outputs (115) assigned to the respectively present operating mode of the optical telecommunications network (100) is evaluated by the first superordinate network node (R2) for receiving the first optical signal (S1) and the second optical signal (S2), **characterised in that** the optical signals of the first outputs (115) of the first and second wavelength-selective switch (111, 112) each correspond to an optical addition of the associated output of the first wavelength-selective switch (111) and the second wavelength-selective switch (112) by means of optical couplers (121).

7. Optical telecommunications network (100) according to claim 6, **characterised in that**
- a fifth signal path (155) extends between the first superordinate network node (R2) and the first network element (R1-1) in the direction from the first superordinate network node (R2) to the first network element (R1-1),
- a sixth signal path (156) extends between the first superordinate network node (R2) and the first network element (R1-1) in the direction from the first superordinate network node (R2) via the second superordinate network node (R2') to the first network element (R1-1),
- a seventh signal path (157) extends between the first superordinate network node (R2) and the second network element (R1-2) in the direction from the first superordinate network node (R2) to the second network element (R1-2),
- an eighth signal path (158) extends between the first superordinate network node (R2) and the second network element (R1-2) in the direction from the first superordinate network node (R2) via the second superordinate network node (R2') to the second network element (R1-2),
the fifth and sixth signal path (155, 156) and the seventh and eighth signal path (157, 158) in each case being disjunct on the optical transmission link (150) and in each case combining to form the optical transmission link (150), and the optical telecommunications network (100) being configured in such a way that a third optical signal (S3) is transmitted from the first superordinate network node (R2) to the first network element (R1-1) both via the fifth signal path (155) and via the sixth signal path (156) and a fourth optical signal (S4) is transmitted from the first superordinate network node (R2) to the second network element (R1-2) both via the seventh signal path (157) and via the eighth signal path (158),
the second superordinate network node (R2') comprising a fourth wavelength-selective switch (114) for the sixth and eighth signal path (156, 158), the fourth wavelength-selective switch (114) comprising second outputs (116) in such a way that one of the plurality of operating modes of the optical telecommunications network (100) is assigned to each of the second outputs (116), and the optical telecommunications network (100) being configured in such a way that the third optical signal (S3) and/or the fourth optical signal (S4) are passed on to the first and/or second network element (R1-1, R1-2) by the second superordinate network node (R2').

8. Optical telecommunications network (100) according to either claim 6 or claim 7, **characterised in that** the first superordinate network node (R2) comprises a first power monitor (131) and a first optical switch (141), the optical telecommunications network (100) being configured in such a way that, for the evaluation - for receiving the first optical signal (S1) and the second optical signal (S2) by the first superordinate network node (R2) - of the one of the first outputs (115) assigned to the respectively present operating mode of the optical telecommunications network (100), an optical signal power parameter of at least one of the first outputs (115) is detected by the first power monitor (131), and depending on the detected value of the optical signal power parameter the output of the first outputs (115) is changed by actuating the first switch (141).

9. Computer program comprising program code means, by means of which all of the steps of a method according to any of claims 1 to 5 can be carried out when the computer program is executed on a programmable device and/or a superordinate network node (R2).

10. Computer program product, comprising a computer-readable medium and a computer program stored on the computer-readable medium, comprising program code means which are appropriate so that all of the steps of a method according to any of claims 1 to 5 can be carried out when the computer program is executed on a programmable device and/or a superordinate network node (R2).

## Revendications

1. Procédé pour une transmission de données plus efficace dans un réseau de télécommunication optique (100) en fonctionnement par multiplexage en longueur d'onde de différentes longueurs d'onde optiques, dans lequel le réseau de télécommunication optique (100) présente un premier nœud de réseau de niveau supérieur (R2), un deuxième nœud de réseau de niveau supérieur (R2') et en outre une pluralité d'éléments de réseau (R1-1, R1-2), dans lequel la pluralité d'éléments de réseau (R1-1, R1-2) présente au moins un premier élément de réseau (R1-1) et un deuxième élément de réseau (R1-2), dans lequel le réseau de télécommunication (100) présente une voie de transmission optique (150), dans lequel la voie de transmission optique (150) relie directement ou indirectement entre eux le premier nœud de réseau de niveau supérieur (R2) et le premier élément de réseau (R1-1) ainsi que le premier élément de réseau (R1-1) et le deuxième élément de réseau (R1-2) ainsi que, en outre, le deuxième élément de réseau (R1-2) et le deuxième nœud de réseau de niveau supérieur (R2'), dans lequel la voie de transmission optique (150) relie en outre entre eux le premier nœud de réseau de niveau supérieur (R2) et le deuxième nœud de réseau de niveau supérieur (R2'), de telle sorte que la voie de transmission optique (150) est fermée topologiquement en anneau, dans lequel, par la voie de transmission optique (150) fermée en anneau,
- un premier chemin de signal (151) s'étend entre le premier élément de réseau (R1-1) et le premier nœud de réseau de niveau supérieur (R2) dans le sens allant du premier élément de réseau (R1-1) au premier nœud de réseau de niveau supérieur (R2),
- un deuxième chemin de signal (152) s'étend entre le premier élément de réseau (R1-1) et le deuxième nœud de réseau de niveau supérieur (R2') dans le sens allant du premier élément de réseau (R1-1) au deuxième nœud de réseau de niveau supérieur (R2'), le deuxième chemin de signal (152) allant en outre du deuxième nœud de réseau de niveau supérieur (R2') au premier nœud de réseau de niveau supérieur (R2),
- un troisième chemin de signal (153) s'étend entre le deuxième élément de réseau (R1-2) et le premier nœud de réseau de niveau supérieur (R2) dans le sens allant du deuxième élément de réseau (R1-2) au premier nœud de réseau de niveau supérieur (R2) et
- un quatrième chemin de signal (154) s'étend entre le deuxième élément de réseau (R1-2) et le deuxième nœud de réseau de niveau supérieur (R2') dans le sens allant du deuxième élément de réseau (R1-2) au deuxième nœud de réseau de niveau supérieur (R2'), le quatrième chemin de signal (154) allant en outre du deuxième nœud de réseau de niveau supérieur (R2') au premier nœud de réseau de niveau supérieur (R2),
dans lequel, sur la voie de transmission optique (150), les premier et deuxième chemins de signal (151, 152) ainsi que les troisième et quatrième chemins de signal (153, 154) sont respectivement disjoints et se complètent respectivement pour former la voie de transmission optique (150), et dans lequel un premier signal optique (S1) est transmis du premier élément de réseau (R1-1) au premier nœud de réseau de niveau supérieur (R2) à la fois par le premier chemin de signal (151) et par le deuxième chemin de signal (152), et un deuxième signal optique (S2) est transmis du deuxième élément de réseau (R1-2) au premier nœud de réseau de niveau supérieur (R2) à la fois par le troisième chemin de signal (153) et par le quatrième chemin de signal (154),
dans lequel le réseau de télécommunications optique (100) peut fonctionner dans une pluralité de modes de fonctionnement, la pluralité de modes de fonctionnement présentant au moins un mode de fonctionnement normal et au moins un premier et un deuxième mode de fonctionnement en cas de défaut,
dans lequel le premier nœud de réseau de niveau supérieur (R2) présente un premier commutateur sélectif en longueur d'onde (111) par rapport aux premier et troisième chemins de signal (151, 153) et un deuxième commutateur sélectif en longueur d'onde (112) par rapport aux deuxième et quatrième chemins de signal (152, 154), les premier et deuxième commutateurs sélectifs en longueur d'onde (111, 112) présentant des premières sorties (115) de telle sorte qu'à chacune des premières sorties (115) est associé l'un de la pluralité de modes de fonctionnement du réseau de télécommunication optique (100), et le procédé comprenant l'étape selon laquelle, en fonction du mode de fonctionnement du réseau de télécommunication optique (100), le premier nœud de réseau de niveau supérieur (R2) évalue celle des premières sorties (115) qui est associée au mode de fonctionnement actuel du réseau de télécommunication optique (100) pour la réception du premier signal optique (S1) et du deuxième signal optique (S2),
**caractérisé en ce que** les signaux optiques des premières sorties (115) des premier et deuxième commutateurs sélectifs en longueur d'onde (111, 112) correspondent respectivement à une addition optique de la sortie respective du premier commutateur sélectif en longueur d'onde (111) et du deuxième commutateur sélectif en longueur d'onde (112) au moyen de coupleurs optiques (121).

2. Procédé selon la revendication 1, **caractérisé en ce que**
- un cinquième chemin de signal (155) s'étend entre le premier nœud de réseau de niveau supérieur (R2) et le premier élément de réseau (R1-1) dans le sens allant du premier nœud de réseau de niveau supérieur (R2) au premier élément de réseau (R1-1),
- un sixième chemin de signal (156) s'étend entre le premier nœud de réseau de niveau supérieur (R2) et le premier élément de réseau (R1-1) dans le sens allant du premier nœud de réseau de niveau supérieur (R2) au premier élément de réseau (R1-1) en passant par le deuxième nœud de réseau de niveau supérieur (R2'),
- un septième chemin de signal (157) s'étend entre le premier nœud de réseau de niveau supérieur (R2) et le deuxième élément de réseau (R1-2) dans le sens allant du premier nœud de réseau de niveau supérieur (R2) au deuxième élément de réseau (R1-2), et
- un huitième chemin de signal (158) s'étend entre le premier nœud de réseau de niveau supérieur (R2) et le deuxième élément de réseau (R1-2) dans le sens allant du premier nœud de réseau de niveau supérieur (R2) au deuxième élément de réseau (R1-2) en passant par le deuxième nœud de réseau de niveau supérieur (R2'),
dans lequel, sur la voie de transmission optique (150), les cinquième et sixième chemins de signal (155, 156) ainsi que les septième et huitième chemins de signal (157, 158) sont respectivement disjoints et se complètent respectivement pour former la voie de transmission optique (150), et dans lequel un troisième signal optique (S3) est transmis du premier nœud de réseau de niveau supérieur (R2) au premier élément de réseau (R1-1) à la fois par le cinquième chemin de signal (155) et par le sixième chemin de signal (156), et un quatrième signal optique (S4) est transmis du premier nœud de réseau de niveau supérieur (R2) au deuxième élément de réseau (R1-2) à la fois par le septième chemin de signal (157) et par le huitième chemin de signal (158), dans lequel le deuxième nœud de réseau de niveau supérieur (R2') présente un quatrième commutateur sélectif en longueur d'onde (114) par rapport aux sixième et huitième chemins de signal (156, 158), le quatrième commutateur sélectif en longueur d'onde (114) présentant des deuxièmes sorties (116) de telle sorte qu'à chacune des deuxièmes sorties (116) est associé l'un de la pluralité de modes de fonctionnement du réseau de télécommunication optique (100), et le procédé comprenant l'étape selon laquelle le troisième signal optique (S3) et/ou le quatrième signal optique (S4) sont transmis au premier et/ou au deuxième élément de réseau (R1-1, R1-2) par le deuxième nœud de réseau de niveau supérieur (R2') .

3. Procédé selon l'une des revendications précédentes, **caractérisé en ce que** le premier nœud de réseau de niveau supérieur (R2) présente un premier moniteur de puissance (131) et un premier commutateur optique (141), dans lequel l'évaluation - pour la réception du premier signal optique (S1) et du deuxième signal optique (S2) par le premier nœud de réseau de niveau supérieur (R2) - de la sortie des premières sorties (115) qui est associée au mode de fonctionnement actuel du réseau de télécommunication optique (100) comprend les sous-étapes suivantes :
- dans une première sous-étape, une sortie donnée des premières sorties (115) qui est associée au mode de fonctionnement actuel du réseau de télécommunication optique (100) est évaluée, un paramètre de puissance du signal optique d'au moins une des premières sorties (115) étant détecté par le premier moniteur de puissance (131),
- dans une deuxième sous-étape suivante, il est décidé si la valeur du paramètre de puissance du signal optique détectée dans la première sous-étape indique un changement par rapport à l'évaluation d'une autre sortie des premières sorties (115) que la sortie donnée,
- dans une troisième sous-étape suivante - dans le cas où la valeur détectée du paramètre de puissance du signal optique indique un changement de la sortie des premières sorties (115) - le premier commutateur (141) du premier nœud de réseau de niveau supérieur (R2) est actionné pour évaluer l'autre sortie, ou - dans le cas où la valeur détectée du paramètre de puissance du signal optique n'indique pas de changement de la sortie des premières sorties (115) - on repasse à la première sous-étape.

4. Procédé selon la revendication 3, **caractérisé en ce que** le paramètre de puissance du signal optique de la sortie des premières sorties (115) correspondant au mode de fonctionnement normal est détecté par le premier moniteur de puissance (131) ou que les paramètres de puissance du signal optique de toutes les premières sorties (115) sont détectés par le premier moniteur de puissance (131).

5. Procédé selon l'une des revendications précédentes, **caractérisé en ce que** la détection et l'évaluation du paramètre de puissance du signal optique et l'actionnement du premier commutateur (141) du premier nœud de réseau de niveau supérieur (R2) ont lieu dans un intervalle de temps après l'apparition du cas de défaut, l'intervalle de temps étant inférieur ou au maximum égal à 100 millisecondes.

6. Réseau de télécommunication optique (100) pour une transmission de données plus efficace en fonctionnement par multiplexage en longueur d'onde de différentes longueurs d'onde optiques, dans lequel le réseau de télécommunication optique (100) présente un premier nœud de réseau de niveau supérieur (R2), un deuxième nœud de réseau de niveau supérieur (R2') et en outre une pluralité d'éléments de réseau (R1-1, R1-2), dans lequel la pluralité d'éléments de réseau (R1-1, R1-2) présente au moins un premier élément de réseau (R1-1) et un deuxième élément de réseau (R1-2), dans lequel le réseau de télécommunication (100) présente une voie de transmission optique (150), dans lequel la voie de transmission optique (150) relie directement ou indirectement entre eux le premier nœud de réseau de niveau supérieur (R2) et le premier élément de réseau (R1-1) ainsi que le premier élément de réseau (R1-1) et le deuxième élément de réseau (R1-2) ainsi que, en outre, le deuxième élément de réseau (R1-2) et le deuxième nœud de réseau de niveau supérieur (R2'), dans lequel la voie de transmission optique (150) relie en outre entre eux le premier nœud de réseau de niveau supérieur (R2) et le deuxième nœud de réseau de niveau supérieur (R2'), de telle sorte que la voie de transmission optique (150) est fermée topologiquement en anneau, dans lequel, par la voie de transmission optique (150) fermée en anneau,
- un premier chemin de signal (151) s'étend entre le premier élément de réseau (R1-1) et le premier nœud de réseau de niveau supérieur (R2) dans le sens allant du premier élément de réseau (R1-1) au premier nœud de réseau de niveau supérieur (R2),
- un deuxième chemin de signal (152) s'étend entre le premier élément de réseau (R1-1) et le deuxième nœud de réseau de niveau supérieur (R2') dans le sens allant du premier élément de réseau (R1-1) au deuxième nœud de réseau de niveau supérieur (R2'), le deuxième chemin de signal (152) allant en outre du deuxième nœud de réseau de niveau supérieur (R2') au premier nœud de réseau de niveau supérieur (R2),
- un troisième chemin de signal (153) s'étend entre le deuxième élément de réseau (R1-2) et le premier nœud de réseau de niveau supérieur (R2) dans le sens allant du deuxième élément de réseau (R1-2) au premier nœud de réseau de niveau supérieur (R2) et
- un quatrième chemin de signal (154) s'étend entre le deuxième élément de réseau (R1-2) et le deuxième nœud de réseau de niveau supérieur (R2') dans le sens allant du deuxième élément de réseau (R1-2) au deuxième nœud de réseau de niveau supérieur (R2'), le quatrième chemin de signal (154) allant en outre du deuxième nœud de réseau de niveau supérieur (R2') au premier nœud de réseau de niveau supérieur (R2),
dans lequel, sur la voie de transmission optique (150), les premier et deuxième chemins de signal (151, 152) ainsi que les troisième et quatrième chemins de signal (153, 154) sont respectivement disjoints et se complètent respectivement pour former la voie de transmission optique (150), et dans lequel le réseau de télécommunication optique (100) est configuré de telle sorte qu'un premier signal optique (S1) est transmis du premier élément de réseau (R1-1) au premier nœud de réseau de niveau supérieur (R2) à la fois par le premier chemin de signal (151) et par le deuxième chemin de signal (152), et qu'un deuxième signal optique (S2) est transmis du deuxième élément de réseau (R1-2) au premier nœud de réseau de niveau supérieur (R2) à la fois par le troisième chemin de signal (153) et par le quatrième chemin de signal (154),
dans lequel le réseau de télécommunications optique (100) peut fonctionner dans une pluralité de modes de fonctionnement, la pluralité de modes de fonctionnement présentant au moins un mode de fonctionnement normal et au moins un premier et un deuxième mode de fonctionnement en cas de défaut,
dans lequel le premier nœud de réseau de niveau supérieur (R2) présente un premier commutateur sélectif en longueur d'onde (111) par rapport aux premier et troisième chemins de signal (151, 153) et un deuxième commutateur sélectif en longueur d'onde (112) par rapport aux deuxième et quatrième chemins de signal (152, 154), les premier et deuxième commutateurs sélectifs en longueur d'onde (111, 112) présentant des premières sorties (115) de telle sorte qu'à chacune des premières sorties (115) est associé l'un de la pluralité de modes de fonctionnement du réseau de télécommunication optique (100), et dans lequel le réseau de télécommunication optique (100) est configuré de telle sorte qu'en fonction du mode de fonctionnement du réseau de télécommunication optique (100), le premier nœud de réseau de niveau supérieur (R2) évalue celle des premières sorties (115) qui est associée au mode de fonctionnement actuel du réseau de télécommunication optique (100) pour la réception du premier signal optique (S1) et du deuxième signal optique (S2),
**caractérisé en ce que** les signaux optiques des premières sorties (115) des premier et deuxième commutateurs sélectifs en longueur d'onde (111, 112) correspondent respectivement à une addition optique de la sortie respective du premier commutateur sélectif en longueur d'onde (111) et du deuxième commutateur sélectif en longueur d'onde (112) au moyen de coupleurs optiques (121).

7. Réseau de télécommunication optique (100) selon la revendication 6, **caractérisé en ce que**
- un cinquième chemin de signal (155) s'étend entre le premier nœud de réseau de niveau supérieur (R2) et le premier élément de réseau (R1-1) dans le sens allant du premier nœud de réseau de niveau supérieur (R2) au premier élément de réseau (R1-1),
- un sixième chemin de signal (156) s'étend entre le premier nœud de réseau de niveau supérieur (R2) et le premier élément de réseau (R1-1) dans le sens allant du premier nœud de réseau de niveau supérieur (R2) au premier élément de réseau (R1-1) en passant par le deuxième nœud de réseau de niveau supérieur (R2'),
- un septième chemin de signal (157) s'étend entre le premier nœud de réseau de niveau supérieur (R2) et le deuxième élément de réseau (R1-2) dans le sens allant du premier nœud de réseau de niveau supérieur (R2) au deuxième élément de réseau (R1-2), et
- un huitième chemin de signal (158) s'étend entre le premier nœud de réseau de niveau supérieur (R2) et le deuxième élément de réseau (R1-2) dans le sens allant du premier nœud de réseau de niveau supérieur (R2) au deuxième élément de réseau (R1-2) en passant par le deuxième nœud de réseau de niveau supérieur (R2'),
dans lequel, sur la voie de transmission optique (150), les cinquième et sixième chemins de signal (155, 156) ainsi que les septième et huitième chemins de signal (157, 158) sont respectivement disjoints et se complètent respectivement pour former la voie de transmission optique (150), et dans lequel le réseau de télécommunications optique (100) est configuré de telle sorte qu'un troisième signal optique (S3) est transmis du premier nœud de réseau de niveau supérieur (R2) au premier élément de réseau (R1-1) à la fois par le cinquième chemin de signal (155) et par le sixième chemin de signal (156), et un quatrième signal optique (S4) est transmis du premier nœud de réseau de niveau supérieur (R2) au deuxième élément de réseau (R1-2) à la fois par le septième chemin de signal (157) et par le huitième chemin de signal (158), dans lequel le deuxième nœud de réseau de niveau supérieur (R2') présente un quatrième commutateur sélectif en longueur d'onde (114) par rapport aux sixième et huitième chemins de signal (156, 158), le quatrième commutateur sélectif en longueur d'onde (114) présentant des deuxièmes sorties (116) de telle sorte qu'à chacune des deuxièmes sorties (116) est associé l'un de la pluralité de modes de fonctionnement du réseau de télécommunication optique (100), et dans lequel le réseau de télécommunication optique (100) est configuré de telle sorte que le troisième signal optique (S3) et/ou le quatrième signal optique (S4) sont transmis au premier et/ou au deuxième élément de réseau (R1-1, R1-2) par le deuxième nœud de réseau de niveau supérieur (R2').

8. Réseau de télécommunication optique (100) selon l'une des revendications 6 ou 7, **caractérisé en ce que** le premier nœud de réseau de niveau supérieur (R2) présente un premier moniteur de puissance (131) et un premier commutateur optique (141), le réseau de télécommunication optique (100) étant configuré de telle sorte que pour l'évaluation - pour la réception du premier signal optique (S1) et du deuxième signal optique (S2) par le premier nœud de réseau de niveau supérieur (R2) - de la sortie des premières sorties (115) qui est associée au mode de fonctionnement actuel du réseau de télécommunication optique (100), un paramètre de puissance du signal optique d'au moins une des premières sorties (115) est détecté par le premier moniteur de puissance (131) et, en fonction de la valeur détectée du paramètre de puissance du signal optique, un changement de la sortie des premières sorties (115) est effectué en actionnant le premier commutateur (141).

9. Programme d'ordinateur avec des moyens de code de programme au moyen desquels toutes les étapes d'un procédé selon l'une des revendications 1 à 5 peuvent être mises en œuvre lorsque le programme d'ordinateur est exécuté sur un dispositif programmable et/ou un nœud de réseau de niveau supérieur (R2) .

10. Produit programme d'ordinateur comprenant un support lisible par ordinateur et un programme d'ordinateur stocké sur le support lisible par ordinateur, avec des moyens de code de programme permettant de mettre en œuvre toutes les étapes d'un procédé selon l'une des revendications 1 à 5 lorsque le programme d'ordinateur est exécuté sur un dispositif programmable et/ou un nœud de réseau de niveau supérieur (R2) .
